# EUROPÄISCHE PATENTSCHRIFT

(11) **EP 1 693 616 B1**
(45) Veröffentlichungstag und Bekanntmachung des Hinweises auf die Patenterteilung: **05.09.2007**
(21) Anmeldenummer: 06003350.3
(22) Anmeldetag: 19.02.2006
(51) Int. Cl.: F21V 19/00, H01R 33/94, H05B 41/02

(54) **Leuchtmittelanordnung mit Betriebselektronik in Reduzieradapter**
Lighting device with electronic circuitry in retrofitting adapter
Dispositif d'éclairage avec des circuits électroniques dans un adapteur de taille

(30) Priorität: 20.06.2005 DE 102005028719
(43) Veröffentlichungstag der Anmeldung: 23.08.2006
(73) Patentinhaber: Lehmann, Oskar, 32825 Blomberg (DE)
(72) Erfinder: Ehmen, Ewald, 26409 Wittmund (DE); Kramer, Karl-Georg, 26603 Aurich (DE)
(74) Vertreter: Holland, Ralf

(56) Entgegenhaltungen:
- DE-A1- 10 127 459
- DE-A1- 19 512 307
- US-A- 6 100 638
- US-A1- 2001 034 148
- US-A1- 2004 179 357
- US-A1- 2005 067 977
- US-B1- 6 459 215

## Beschreibung

Die Erfindung betrifft eine Leuchtmittelanordnung für ein axial sich erstreckendes Leuchtmittel, das endseitig mit elektrischen Steckanschlüssen versehen in axialen Distanzstücken gefangen ist für einen Einsatz zwischen zwei Leuchtstoffröhrenfassungen.

Mit Leuchtstoffröhren versehene Leuchten sind in vielfältigen Ausführungsformen bekannt und bewährt. Insbesondere übertrifft die Lebensdauer und der Wirkungsgrad einer Leuchtstoffröhre die einer üblichen Glühbirne erheblich. Von daher ist es nicht verwunderlich, dass mit Leuchtstoffröhren versehene Lampenanordnungen regelmäßig für großflächige Ausleuchtungen beispielsweise in Büros, Hallen, Tiefgaragen oder dergleichen herangezogen werden.

Auch wenn die Verwendung von Leuchtstoffröhren gegenüber herkömmlichen Glühbirnen zu einer deutlichen Reduzierung des Energieverbrauchs führt, besteht der Bedarf, Leuchtstoffröhren durch moderne Energiesparlampen zu ersetzen, bei denen der Wirkungsgrad gegenüber der Leuchtstoffröhre nochmals verbessert ist. Hierbei ist u.a. daran gedacht, eine T5-Fluoreszenz-Langfeldenergiesparlampe in einer Halterung einer T12- bzw. T8-Leuchte mit magnetischem Vorschaltgerät zu betreiben, wozu ein elektronisches Vorschaltgerät ferner dann noch nötig ist.

Bekannte Leuchtmittelanordnungen der voranstehend beschriebenen Art sind wenig überzeugend. Zum einen bestehen erhebliche Sicherheitsbedenken, da die elektronischen Vorschaltgeräte erhebliche Wärme entwickeln, die zur Zerstörung der axialen Distanzstücke führen können und was darüber hinaus eine Brandgefahr bedeutet.

Durch die Notwendigkeit des Betriebes moderner Energiesparlampen an einem elektronischen vorschaltgerät ist ferner, insbesondere bei einem Austausch einer herkömmlichen Leuchtstoffröhre, eine Neuverkabelung bzw. Neuverschaltung der Leuchte nötig, was gleichfalls eine Gefährdung bedeuten kann, wenn dies durch unbedarfte Laien erfolgt.

Die US 6 100 638 zeigt eine Leuchtmittelanordnung gemäß dem Oberbegriff von Anspruch 1, bei der eine Betriebselektronik in den Distanzstücken vorgesehen ist.

Vor diesem technischen Hintergrund macht die Erfindung es sich zur Aufgabe, eine Leuchtmittelanordnung der eingangs genannten Art zur Verfügung zu stellen, die einen sicheren Betrieb moderner Leuchtmittel in üblichen Leuchtstoffröhrenfassungen ermöglicht und die in einfacher weise eine entsprechende umrüstung auf ein solches Leuchtmittel erlaubt.

Gelöst wird diese technische Problematik bei einer Leuchtmittelanordnung für ein axial sich erstreckendes Leuchtmittel, das endseitig mit elektrischen Steckanschlüssen versehen in axialen Distanzstücken gefangen ist für einen Einsatz zwischen zwei Leuchtstoffröhrenfassungen, gemäß des Anspruchs 1 durch die Anordnung einer Betriebselektronik in den Distanzstücken. Hierbei ist insbesondere daran gedacht, dass die gesamte Betriebselektronik in einem Distanzstück und in dem anderen Distanzstück, falls nötig, ein magnetisches Vorschaltgerät wie eine Netzdrossel oder dergleichen angeordnet ist. Alternativ kann in einem Distanzstück auch die gesamte Betriebselektronik und ein Vorschaltgerät angeordnet sein. Entsprechend können die Distanzstücke unterschiedliche axiale Länge beispielsweise auch aufweisen, so dass ausreichend Raum für das Vorschaltgerät bzw. die Betriebelektronik jeweils gegeben ist.

In einfacher Weise kann so das Leuchtmittel, gefangen zwischen den axialen Distanzstücken, eine herkömmliche Leuchtstoffröhre ersetzen, ohne das es wesentlicher Eingriffe in die elektrische verschaltung der Leuchte noch bedarf. Darüber hinaus ist eine äußerst kompakte Leuchtmittelanordnung geschaffen, bei der auf zusätzliche Schaltungselemente außerhalb der eigentlichen Leuchte verzichtet ist.

Gemäß der Erfindung ist vorgesehen, dass die Betriebselektronik ein Startmodul für einen Anschluss an die distale Seite des Leuchtmittels aufweist, ein an das Startmodul angeschlossenes Sicherheitsmodul, daran anschließend ein Filtermodul, ein Gleichrichter- und Spannungsstabilisierungsmodul, ein Rechteckgenerator-Modul, ein Spannungstransformator-Modul und abschließend angeschlossen an die proximale Seite des Leuchtmittels ein Überspannungsschutz- und End of Live-Modul.

Durch die Überbrückung des bei Leuchtstoffröhren regelmäßig vorhandenen Starters durch eine Kurzschlussbrücke wird sichergestellt, dass an der Betriebselektronik die Versorgungsspannung eines Lichtnetzes permanent und gleich bleibend anliegt. Es ist dies der einzige Eingriff in die elektrische Schaltung einer herkömmlichen Leuchte bei deren Umrüstung. Daher ist es zweckmäßig, wenn vorgesehen wird, dass die Kurzschlussbrücke die Kontakte einer vorhandenen Fassung eines Starters einer Leuchtstofflampenfassung überbrückt. Das Entfernen des herkömmlichen Starters und dessen Ersetzen durch eine gesondert ausgebildete Kurzschlussbrücke ist auch für einen Laien unproblematisch möglich. Alternativ, gleichwohl unproblematisch, kann an den Starter eine Kurzschlussbrücke angesetzt werden und ist dann der Starter erneut in seine Fassung einzubringen.

Dabei hat es sich als zweckmäßig erwiesen, wenn die Kurzschlussbrücke von einem gesondert ausgebildeten Gehäuse überdeckt wird, bspw. auch in diesem integriert, so dass eine unbeabsichtigte Berührung der die Lichtnetzspannung führenden Kurzschlussbrücke ausgeschlossen ist. Dabei wird das Gehäuse mit einem geeigneten Gewinde, einem Bajonettanschluß oder dergleichen versehen sein, entsprechend dem Anschluß des Starters.

Das Startmodul kann, eigenständig ausgebildet, einerends des Leuchtmittels angesetzt sein. Durch das Startmodul wird während des Startvorgangs die Betriebsspannung herabgesetzt, so dass die Zündung des Leuchtmittels vergleichsweise schonend erfolgt. Nach dem Zünden des Leuchtmittels werden die nachfolgenden Module von dem Startmodul mit der vollen Betriebsspannung dann versorgt. Hierzu ist es zweckmäßig, dass das Startmodul an den distalen Anschlüssen des Leuchtmittels den fließenden Strom überwacht.

Das beispielsweise mit den übrigen Modulen in dem proximalen Distanzstück angeordnete Sicherheitsmodul weist bevorzugt eine Thermosicherung auf, durch die bei einer Überhitzung eine Stromunterbrechung der Betriebselektronik herbeigeführt wird. Insbesondere ist daran gedacht, dass mittels eines oder mehrerer Thermoelemente die kritischen Elemente der Betriebselektronik überwacht werden, gegebenenfalls auch die Betriebstemperatur des Leuchtmittels, insbesondere dann, wenn dieses in einem Schutzrohr oder dicht unter einem Reflektor angeordnet ist.

Das Sicherheitsmodul überwacht auch die Strom- bzw. Spannungsversorgung der übrigen Module und weist bevorzugt eine Überstromabschaltung auf, die bei einem eingangsseitig zu hohem Strom die Betriebsspannung unterbricht. Ebenso wird das Sicherheitsmodul auftretende Spannungsspitzen beschränken, so dass eine Gefährdung der übrigen Module durch zu hohen Strom bzw. zu große Spannungsspitzen sicher ausgeschlossen ist.

Das anschließende Filtermodul weist einen Y-Kondensator gemäß VDE in an sich bekannter Anordnung auf. Bei einer Ausführungsform nach der Erfindung ist darüber hinausgehend vorgesehen, dass das Filtermodul einen zu einer Gleichrichterstrecke des nachfolgenden Gleichrichter- und Spannungsstabilisierungsmoduls parallel geschalteten Kondensator aufweist. Gleichsam rückgekoppelt von dem nachfolgenden Gleichrichter- und Spannungsstabilisierungsmodul sind insbesondere bei einer Brückengleichrichtung zwei Kondensatoren regelmäßig vorgesehen, die zwischen zwei Gleichspannungsausgängen des Gleichrichter- und Spannungsstabilisierungsmoduls und dessen gleichzurichtende Eingangsspannung geschaltet sind, wozu von dem Gleichrichter- und Spannungsstabilisierungsmodul eine Gleichspannung an das Filtermodul rückgeführt wird. Zweck dieser Kondensatoren ist die Unterbindung einer Netztonmodulation.

In an sich üblicher Weise erfolgt in dem Gleichrichter- und Spannungsstabilisierungsmodul die Gleichrichtung der anliegenden Betriebswechselspannung sowie, sofern erforderlich, deren Stabilisierung. Bevorzugt weist darüber hinaus dieses Modul einen passiven, nachgeschalteten PFC, einen Power-Factor-Controller noch auf.

Der mit einer von dem Gleichrichter- und Spannungsstabilisierungsmodul gelieferten Gleichspannung beaufschlagte Multivibrator des Rechteckgenerator-Moduls setzt diese in eine hochfrequente Rechteckspannung um, die letztlich zum Zünden und zum Betrieb des Leuchtmittels herangezogen wird. Liefert der Multivibrator kein Ausgangssignal, so kann das Leuchtmittel nicht weiter betrieben werden. Von daher ist es zweckmäßig, wenn der Multivibrator mittels eines elektrischen Schaltsignals abschaltbar ist. Dies kann beispielsweise dauerhaft oder auch intermittierend erfolgen, beispielsweise wenn das Leuchtmittel bspw. bei einem Start nicht gezündet wird.

Die von dem Multivibrator generierte Rechteckspannung wird gemäß der Erfindung einem Spannungstransformator eines dem Rechteckgenerator-Modul nachfolgenden Moduls zugeführt. Der Transformator ist so bemessen, dass hochspannungsseitig die zur Zündung und den Betrieb benötigte Hochspannung anliegt. Durch den Spannungstransformator wird der bei herkömmlichen Schaltungen übliche Resonanzkreis ersetzt.

In der Verschaltung des Spannungstransformators ist weiter hochspannungsseitig ein kapazitiver, gegen Masse geschalteter Widerstand vorgesehen, durch den der Brennstrom begrenzt und Oberschwingungen nach Masse abgeleitet werden.

Insbesondere ist daran gedacht, dass die beiden Wicklungen des Spannungstransformators in Reihe in einer ein Potential gegen eine Masse führende Leitung geschaltet sind. Es ist dann weiter vorgesehen, dass zwischen den Wicklungen des Spannungstransformators der kapazitive, gegen Masse geschaltete Widerstand angeordnet ist.

Durch das Windungsverhältnis der Transformatorenwicklungen, beispielsweise 1:2, erfolgt eine Anpassung an die zur Verfügung gestellte Versorgungswechselspannung. Durch einfachen Austausch des Transformators, vorgesehene Herausführungen der Wicklungen und dergleichen kann, gegebenenfalls auch elektronisch geschaltet, das Windungsverhältnis variiert und damit an die vorgegebene Versorgungswechselspannung angepasst werden.

Der kapazitive Widerstand begrenzt während des Startvorgangs des Leuchtmittels den Strom und dient darüber hinaus der exakten Einstellung des Brennstroms. Werteänderungen des kapazitiven Widerstandes erlauben eine Variation des Brennstroms, so dass eine Vielzahl von Leuchtmitteln betrieben werden können. Ferner werden Oberschwingungen durch den kapazitiven Widerstand gegen Masse abgeleitet.

Der Abgriff der Zünd- und Brennspannung des Leuchtmittels an dem Spannungstransformator erfolgt über ein Überspannungsschutz- und End of Live-Modul, angeschlossen an den proximalen Anschlüssen des Leuchtmittels. Durch dieses Modul wird die Zündspannung begrenzt und die Brennspannung überwacht. Insbesondere ist vorgesehen, dass eine Sicherheitsabschaltung des Überspannungsschutz- und End of Live-Moduls ein elektrisches Schaltsignal an dem Multivibrator liefert, das diesen abschaltet, wenn keine zündung des Leuchtmittels erfolgt ist, beispielsweise dieses das Ende seiner Lebensdauer erreicht hat. Dabei kann ferner vorgesehen werden, dass sich die Sicherheitsabschaltung nach einer vorgebbaren Zeit, beispielsweise 10 sek., zurückstellt.

Für die mechanische Ausgestaltung der Lampenanordnung nach der Erfindung bieten sich eine Vielzahl von Möglichkeiten an. Bei einer bevorzugten Ausführungsform ist vorgesehen, dass ein axiales Distanzstück mehrteilig aufgebaut ist mit einer das Leuchtmittel einerends in einem Aufnahmeraum aufnehmenden Aufnahme und andernends einer die Aufnahme abschließenden Kappe. Durch diese Maßnahme ist sichergestellt, dass zum einen eine sichere Aufnahme des Leuchtmittels, letztlich sowohl mechanisch als auch elektrisch, erfolgt und dass eine in der Aufnahme angeordnete Elektronik gegenüber der Umwelt abgeschlossen ist.

Insbesondere ist daran gedacht, dass axial außen vor dem Aufnahmeraum liegend durch eine Querschnittsvergrößerung dieser Ausnehmung eine Ringschulter ausgebildet ist, dass gegen die Ringschulter ein Stopfen gesetzt ist und das der Stopfen eine radial ausliegende Nut aufweist, in der ein gegen das Leuchtmittel abdichtender Dichtungsring gefangen ist. Neben dem dem verbesserten mechanischen Halt des Leuchtmittels wird durch diese Maßnahme insbesondere auch ein abgedichteter elektrischer Anschluss des Leuchtmittels sichergestellt, so dass der mechanische wie elektrische Übergang von der Aufnahme auf das Leuchtmittel wasser- und/oder explosionsgeschützt auch ausgebildet sein kann.

Für einen derartig geschützten Übergang von dem Distanzstück auf eine spannungsführende Fassung einer Leuchtstoffröhre ist weiter vorgesehen, dass ein Distanzstück in einer Überwurfmutter gehalten ist, die einerends ein Innengewinde aufweisend mit einem Außengewinde einer Leuchtstoffröhxenfaasung verschraubbar ist. Ein mechanisch abgedeckter, sehr stabiler Übergang ist damit geschaffen, wobei für eine verbesserte Abdichtung weiter vorgesehen sein kann, dass andernends die Überwurfmutter einen gewindelosen Abschnitt aufweist, der einen auf die Aufnahme aufgebrachten Flachdichtring überdeckt. In weiterer konstruktiver Ausgestaltung wird dieser Flachdichtring von einer Nase der Überwurfmutter übergriffen, so dass er mit Verschrauben derselben axial auf der Aufnahme des Leuchtmittels verschoben werden kann.

In weiterer konstruktiver Ausgestaltung ist vorgesehen, dass in einer Aufnahme wenigstens ein elektronisches Modul auf einer Platine aufgebaut ist, dass der Innenwand der Aufnahme Nasen vorstehen, die mit Nuten in einem der inneren Geometrie einer Aufnahme entsprechenden Abschnitt der Platine für ein unverwechselbares Einbringen korrespondieren. Schaltungstechnik ist so ein hohes Maß an Sicherheit gegeben, selbst bei einer Nachrüstung einer Leuchtenanordnung nach der Erfindung durch einen technischen Laien, unabhängig von dem Querschnitt einer Aufnahme, bspw. einem eckigen, ovalen oder bevorzugt runden Querschnitt.

Wie eingangs erläutert, wird regelmäßig wenigstens ein elektronisches Modul der Betriebselektronik einerends des Leuchtmittels angeschlossen sein. Ist in beiden Aufnahmen jeweils wenigstens ein elektronisches Modul auf einer Platine aufgebaut, ist bevorzugt vorgesehen, dass beide ein Leuchtmittel einfassende Aufnahmen axial auf das Leuchtmittel vorstehende Nasen aufweisen, die für eine verkabelung der Module vorgesehene Durchbrechungen und/oder Kontaktmittel überdecken.

Für eine derartige Verkabelung können oberseitig eines Reflektors Führungen vorgesehen sein, in denen einzelne Kabel gehalten sind, womit sowohl eine elektrisch exakte als auch ansehnliche verkabelung gewährleistet ist.

In weiterer Ausgestaltung der Leuchtmittelanordnung nach der Erfindung ist vorgesehen, dass der Reflektor an dem Leuchtmittel durch Halterungen festgelegt ist.

Derartige Halterungen sind in verschiedenen Varianten in der DE 20 2004 012 973 wie nachstehend erläutert.

Neben derartigen Halterung des Reflektors an dem Leuchtmittel kann vorgesehen sein, durch an dem Reflektor und/oder dem Leuchtmittel selbst festgelegte Spreizvorrichtungen den Reflektor von dem Leuchtmittel fernzuhalten.

Problemlos kann ein transparentes Schutzrohr vorgesehen werden, in dem bevorzugt ein Reflektor mit seinen freien Enden auf der Innenwand des Schutzrohres vorspringenden Nasen aufsitzt. Es kann dann der Reflektor oberseitig eingezogen sein derart, dass er auf den vorspringenden Nasen aufsitzend in oberen Abschnitten gegen die Innenwand des Schutzrohrs verspannt ist. Eine verdrehsichere, mechanisch stabile Halterung des Reflektors in dem Schutzrohr ist damit verwirklicht. Darüber hinaus wird durch das Einziehen der Oberseite des Reflektors zusätzlicher Raum zwischen diesem und der Innenwand des Schutzrohres bspw. für eine Verkabelung geschaffen.

Gemäß der DE 20 2004 012 973 U1 ist bei den in Rede stehenden Halterungen des Reflektors an dem Leuchtmittel weiter vorgesehen, dass mittels einer einstellbaren Halterung zur Aufnahme des Reflektors die räumliche Lage desselben zur zylinderförmigen Anordnung, wie der Lampe, mechanisch, elektrisch und optisch veränderbar ist.

Nach einer weiteren Ausbildung der Erfindung wird die einstellbare Halterung zur Aufnahme des Reflektors an der zylinderförmigen Anordnung, wie dem Glaskolben der Lampe, montiert.

Die Definition der Lichtstärke nimmt Bezug auf eine bestimmte Ausstrahlungsrichtung. Wird sie in mehreren Richtungen gemessen, ergibt sich die Lichtstärkeverteilung (LV). Diese Verteilung wird üblicherweise in Form von Radiusvektoren aufgetragen; eine Darstellung über alle Ausstrahlungsrichtungen ergibt den Lichstärkeverteilungskörper; ein ebener Schnitt durch diesen ergibt eine Lichtstärkeverteilungskurve (LVK).

Die Lichtstärkeverteilung einer Leuchte kennzeichnet die Lichtlenkung im einzelnen. Aus ihr lassen sich die Verteilung der direkten Beleuchtungsstärken auf der beleuchteten Fläche, die Klasseneinteilung bei Innenraumleuchten, Beleuchtungswirkungagrade, Gleichmäßigkeit der Beleuchtungsstärke, die Schattigkeit und das Maß der Blendfreiheit ableiten. Die Form der Lichtstärkeverteilungskurve läßt sich durch die Geometrie des Reflektors/Spiegels und/oder ein Verstellen der Reflektor/Spiegel-Anordnung relativ zur Lampe oder umgekehrt den Erfordernissen der Beleuchtung anpassen. Darin liegen die mit der Erfindung erzielbaren Vorteile im besonderen.

Gemäß einer weiteren Ausgestaltung der Erfindung ist die Halterung zur Aufnahme des Reflektors/Spiegels an der zylinderförmigen Anordnung, wie dem Glaskolben der Lampe, verschieblich angebracht.

Je nach Erfordernis der Beleuchtungsaufgabe, kann die Reflektor-/Spiegel-Anordnung in Teilen, symmetrisch oder unsymmetrisch, mittels der Halterung auf der zylinderförmigen Anordnung, wie dem Kolben der Lampe, angeordnet sein.

Je nach statischer Beschaffenheit der Reflektor-/Spiegel-Anordnung können mehrere Halterung die mechanische Verbindung zur zylinderförmigen Anordnung, wie dem Kolben der Lampe, herstellen.

Die Befestigungsart der Halterung auf der zylinderförmigen Anordnung kann - je nach Materialbeschaffenheit derselben - mit oder ohne Hilfsmittel, wie z.B. Schrauben, Scheiben, Federringen, Muttern und/oder Federn, durch Rasten, Clipsen, Klammern, Verspannen, Verdrehen/Verriegeln, Binden o.a. erfolgen.

Die mechanische Befestigungsart der Reflektor-/Spiegel-Anordnung kann - je nach Materialbeschaffenheit von Reflektor/Spiegel und Halterung - mit oder ohne Hilfsmittel durch Rasten, Clipsen, Verschrauben, Einspannen o.ä. erfolgen. Das Eigengewicht der Reflektor-/Spiegel-Anordnung ist gering; die Höhen- und Seiten-Verstellbarkeit hinsichtlich einer Brennpunkteinstellung muß gegeben sein.

Die Leuchtmittelanordnung nach der Erfindung wird anhand der Zeichnung näher erläutert, in der lediglich schematisch Ausführungsbeispiele dargestellt sind. In der Zeichnung zeigt:
- Fig. 1:: eine schematische Übersichtsdarstellung der Leuchtmittelanordnung,
- Fig. 2:: ein elektrisches Blockschaltbild,
- Fig. 3:: die elektrische Schaltung eines Startmoduls,
- Fig. 4:: die elektrische Schaltung des Spannungstransformators,
- Fig. 5:: eine Explosionsdarstellung einer Lampenanordnung nach der Erfindung,
- Fig. 6:: eine Seitenansicht der montierten Anordnung nach Figur 5,
- Fig. 7:: einen Schnitt gemäß der Linie VII, VII in Figur 6,
- Fig. 8:: eine stirnseitige Ansicht,
- Fig. 9:: eine isometrische Darstellung einer teilweise geöffneten Leuchtmittelanordnung,
- Fig. 10:: eine stirnseitige Ansicht einer Aufnahme,
- Fig. 11:: einen Schnitt durch eine axial kurz ausgebildete Aufnahme,
- Fig. 12:: eine erste isometrische Darstellung einer axial kurz ausgebildeten Aufnahme,
- Fig. 13:: eine zweite isometrische Darstellung einer Aufnahme kurzer axialer Baulänge,
- Fig. 14:: einen Längsschnitt durch eine Aufnahme großer axialer Baulänge,
- Fig. 15:: eine stirnseitige Ansicht der Aufnahme nach Figur 14,
- Fig. 16:: eine erste isometrische Darstellung der Aufnahme nach Figur 14,
- Fig. 17:: eine zweite isometrische Darstellung,
- Fig. 18:: eine erste isometrische Darstellung einer Überwurfmutter,
- Fig. 19:: eine zweite isometrische Darstellung der Überwurfmutter,
- Fig. 20:: einen Schnitt durch die Überwurfmutter,
- Fig. 21:: eine stirnseitige Ansicht eines weiteren Ausführungsbeispiels eines Reflektors,
- Fig. 22:: einen Schnitt durch eine Reflektor/Schutzrohranordnung,
- Fig, 23:: eine stirnseitige Ansicht einer Halterung,
- Fig. 24:: eine in einen Reflektor eingesetzte Halterung,
- Fig. 25:: eine einstückige Klipp-Halterung mit einer Schlitzaufnahme für einen Reflektor mit einer Rechtecklochung in einer perspektivischen Darstellung,
- Fig. 26:: eine einstückige Klipp-Halterung mit einer Rastaufnahme für einen Reflektor mit einer Rechtecklochung in einer perspektivischen Darstellung,
- Fig. 27:: eine einstückige Rast-Halterung mit einer Schlitzaufnahme für einen Reflektor mit einer Rechtecklochung in einer Vorderansicht
- Fig. 28:: eine einstückige Schraub-Halterung mit einer Rastaufnahme für einen Reflektor mit einer Rechtecklochung in einer Vorderansicht,
- Fig. 29:: eine einstückige Schellen-Halterung mit einer Schraubbefestigung für einen Reflektor mit einer Bohrung in einer Vorderansicht,
- Fig. 30:: eine zweistückige Schellen-Halterung mit einer Haken- und Schraubbefestigung für einen Reflektor mit einer Bohrung in einer Vorderansicht,
- Fig. 31:: eine zweistückige Schellen-Halterung mit einer Schraubbefestigung für einen Reflektor mit einer Bohrung in einer Vorderansicht,
- Fig. 32:: eine zweistückige Klipp-Halterung mit einer Rastaufnahme für einen Reflektor mit einer Rechtecklochung in einer Vorderansicht,
- Fig. 33:: eine zweistückige Klapphalterung mit einer Feder und Rastaufnahme für einen Reflektor mit einer Rechtecklochung in einer Vorderansicht,
- Fig. 34:: eine zweistückige Klapp-Halterung mit einer Feder und Druck-Spannaufnahme für einen Reflektor mit einer Lochung in einer Vorderansicht,
- Fig. 35:: eine zweistückige Klapp-Halterung mit einer Feder und Zug-Spannaufnahme für einen Reflektor mit einer Lochung in einer Vorderansicht,
- Fig. 36:: eine Ausführungsform einer einstückigen Halterung mit einer Aufnahme,
- Fig. 37:: ein gesondert ausgebildetes Gehäuse für eine Überdeckung einer Kurzschlussbrücke in einer isometrischen Darstellung,
- Fig. 38:: das Gehäuse gem. Fig. 37 in einer isometrischen Darstellung von unten,
- Fig. 39:: das Gehäuse in einer Seitenansicht,
- Fig. 40:: das Gehäuse in einer Draufsicht,
- Fig. 41:: einen Schnitt gem. der Linie XXXXI, XXXXI in Fig. 40,
- Fig. 42:: das Gehäuse in einer Ansicht von unten,
- Fig. 43:: einen Schlüssel für das Einsetzen und verriegeln des Gehäuses in einer isometrischen Darstellung und
- Fig. 44:: einen Längsschnitt durch den Schlüssel.

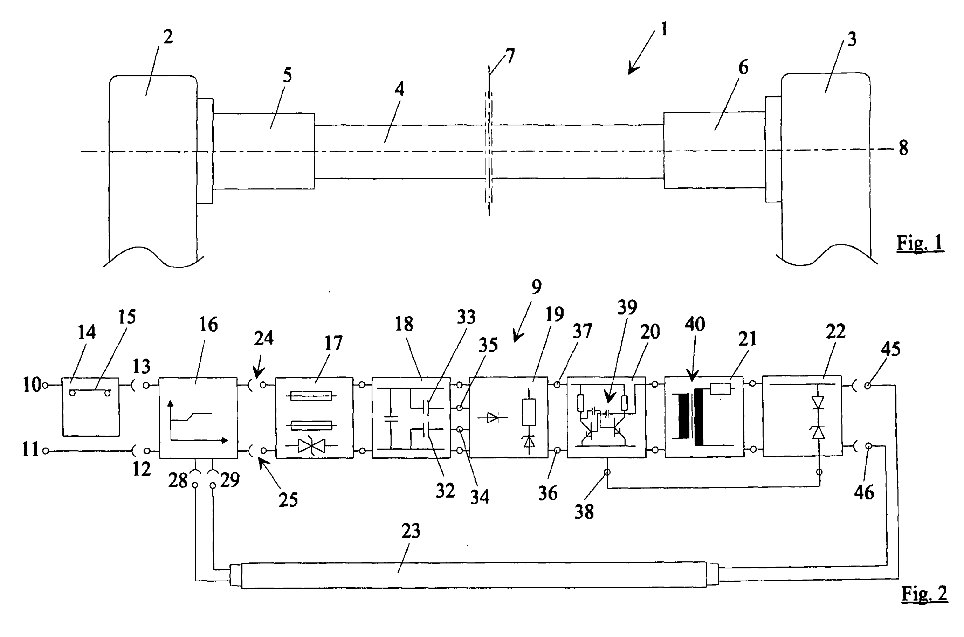

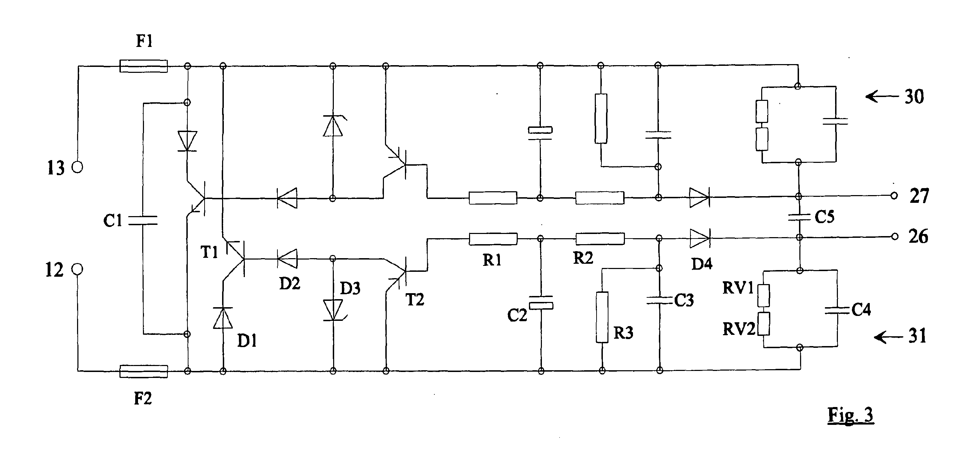

Figur 1 zeigt den prinzipiellen, mechanischen Ausbau einer Leuchtmittelanordnung 1 nach der Erfindung. Zwischen zwei Leuchtstoffröhrenfassungen 2, 3 herkömmlicher Bauart, deren mechanische Verbindung nicht dargestellt ist, ist ein Leuchtmittel 4, beispielsweise eine T5-Fluoreszenz-Langfeldlampe vorgesehen. Da diese nicht den Abmessungen der normalerweise vorgesehenen T12- oder T8-Leuchtstoffröhren entspricht, ist das endseitig mit elektrischen Steckanschlüssen zumeist in Form von zwei Kontaktstiften, versehene Leuchtmittel 4 in zwei axialen Distanzstücken 5,6 gefangen, durch die die Unterschiede in den Abmessungen und elektrischen Anschlüssen der Leuchtmittel ausgeglichen werden und die ihrerseits in den Leuchtstoffröhrenfassungen 2,3 eingesetzt sind.

Die Leuchtmittelanordnung nach Figur 1 ist eine symmetrische, sowohl spiegelbildlich hinsichtlich einer Mittelebene 7 als auch koaxial zu einer Längsachse 8. Es ist jedoch unproblematisch möglich, die axialen Abmessungen der Distanzstücke 5,6 unterschiedlich vorzugeben wie auch die koaxiale Anordnung des Leuchtmittels 4 und der Distanzstücke 5,6 zu verlassen, beispielsweise um einen Ausgleich für einen Reflektor, ein Schutzrohr oder dergleichen mehr zu schaffen.

Darüber hinaus ist die Geometrie der Distanzstücke 5,6, mit Ausnahme des axialen Längenausgleichs und den vorgegebenen elektrischen Anschlüssen weitestgehend beliebig, wenn auch eine zylindrische Geometrie bevorzugt wird.

Der Betrieb eines Leuchtmittels 4, beispielsweise eine T5-Leuchtstsoffröhre von 28 Watt bzw. 35 Watt bedarf einer Vorschaltelektronik. Erfindungsgemäß ist vorgesehen, diese Betriebselektronik, insbesondere vollständig in einem oder aufgeteilt in den beiden Distanzstücke 5,6 anzuordnen, insbesondere auch ein magnetisches Vorschaltgerät wie eine Drossel oder dergleichen mehr, wenn ein solches Vorschaltgerät für den Betrieb des Leuchtmittels 4 notwendig ist.

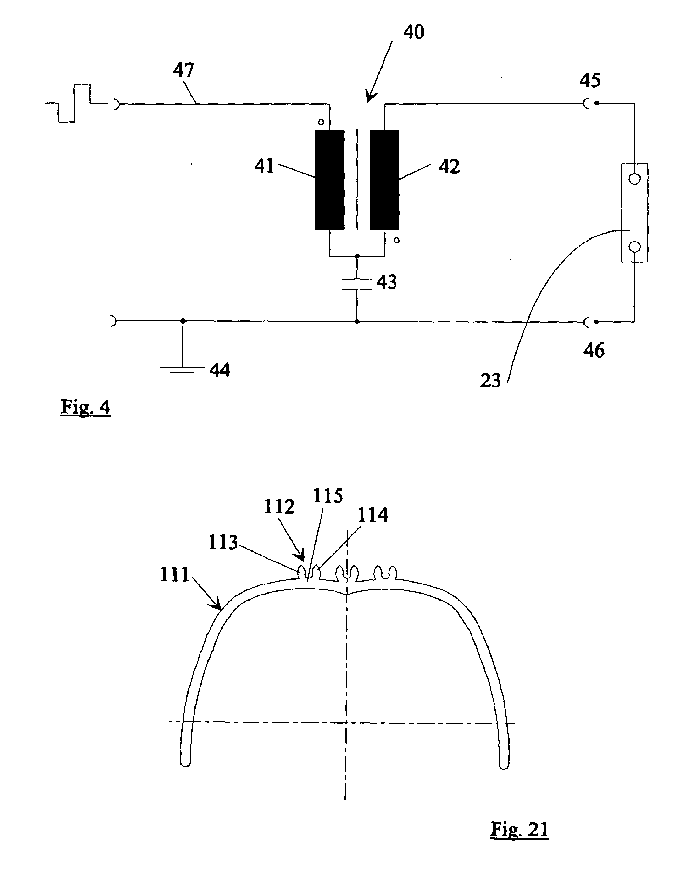

Eine Ausführung der Betriebselektronik 9 ist in einem Blockschaltbild in Figur 2 dargestellt.

In herkömmlicher Weise liegt eine Versorgungsspannung eines Lichtstromnetzes an den Anschlüssen 10,11 an einer nicht dargestellten Leuchte für eine übliche Leuchtstoffröhre an. Von diesen Anschlüssen 10,11, ist einer, hier der Anschluss 11, leuchtenintern regelmäßig mit einem Kontakt 12 einer Leuchtstoffrohrenfassung verbunden. An dem anderen Kontakt 13 der Leuchtstoffröhrenfassung ist gleichfalls die anliegende Versorgungsspannung permanent als Betriebsspannung zur Verfügung zu stellen, weshalb der übliche Starter 14 mittels einer Kurzschlussbrücke 15 überbrückt wird, die insbesondere unterseitig eines Starters 14 aufgesteckt vorgesehen sein kann.

Nach den Kontakten 12,13 folgen bei dem Ausführungsbeispiel sieben elektrische/elekt:ronische Funktions-Module 16-22.

Eine Startmodul 16, hier räumlich abgesetzt von den weiteren Modulen 17-22, ist zwischen den Kontakten 12,13 der Leuchtstoffröhrenfassung und den Anschlüssen 28,29 auf der distalen Seite eines Leuchtmittels 23 vorgesehen und entsprechend vorzugsweise in einem der Distanzstücke angeordnet. Die übrigen Module 17-22 sind andernends des Leuchtmittels 23 in dem anderen Distanzstück dann vorgesehen und letztlich an die proximale Seite des Leuchtmittels 23 angeschlossen.

Aufgabe des Startmoduls 16 ist es, während des Startvorgangs des Leuchtmittels 23 die anliegende Betriebsspannung herabzusetzen und erst nach dem Zünden des Leuchtmittels 23 die volle Betriebsspannung dem nachfolgenden Sicherheitsmodul 17 über Verbindungen 24,25 bspw. in Form einer Verkabelung zur Verfügung zu stellen. Ferner ist vorgesehen, dass das Startmodul 16 an den distalen Anschlüssen 28,29 des Leuchtmittels 23 den fließenden Strom überwacht.

Die elektrische Schaltung eines Startmoduls ist in Figur 3 wiedergegeben.

Die vorzugsweise auf einer runden Platine, dem Innendurchmesser eines zylindrischen Distanzstücks angepasst, aufgebaute Schaltung nach Figur 3 wird mit Kontakten 26,27 auf die distalen Anschlüsse 28,29 eines Leuchtmittels 23 aufgesteckt. Eingangsseitig ist der Vierpol nach Figur 3 mit den Kontakten 12,13 einer Leuchtstoffröhrenfassung verbunden.

Die Schaltung gemäß Figur 3 weist zwei Schaltkreise 30,31 auf, jeweils für eine Halbwelle der an den Kontakten 12,13 anliegenden Wechselspannung, die gleichartig ausgebildet durch eine längsmittelebene der Figur 3 getrennt sind. Verbunden und insbesondere hochfrequenzsmäßig zusammengeführt sind diese beiden Schaltkreise 30,31 durch die zwei Kondensatoren C1 und C5.

Die Aufspaltung in die beiden Schaltkreise 30,31 ist erforderlich, da eine Heizspannung, die aus dem Betriebsstromkreis gewonnen wird, zu einer Wendel des Leuchtmittels 23 über Vorwiderstände RV1, RV2 durchgeschleift wird.

Besonders gealterte oder tiefen Temperaturen ausgesetzte Leuchtmittel werden während der Startphase erhöhten Beanspruchungen ausgesetzt, die zum verstärkten Abbrand bis hin zu einer Zerstörung der Betriebselektronik führen können. Eine Absenkung der Betriebsspannung während des Startvorgangs erhöht die Betriebssicherheit und schützt das angeschlossene Leuchtmittel 23 vor überhöhten elektrische Startspannungen bzw. Strömen. Durch eingebaute Zeitglieder steigt die Betriebsspannung und damit die Helligkeit, beispielsweise nach 2s, kontinuierlich auf ihren Sollwert.

Hierzu begrenzt einer Zenerdiode D3 die Wendelspannung auf ca. 10 Volt, da ab diesem Wert der Leistungstransistor T1 über die Diode D2 durchgesteuert wird. Hierdurch werden alle Spannungen und Spannungsspitzen über 10 Volt sowie alle Diodenflussspannungen kurzgeschlossen. Kurzzeitig auftretende Ladestromspitzen, beispielsweise aus Ladeelektrolytkondensatoren der Betriebselektronik, sowie aus dem Lichtstromnetz kommende Störstromspitzen bis etwa 1 A werden von der Wendel des Leuchtmittels 23 ferngehalten und von dem Leistungstransistor T1 in wärme umgesetzt. Für diesen ist deshalb eine ausreichende Kühlung vorzusehen, beispielsweise durch Auflöten auf eine Leiterplatte. Nach erfolgter Zündung des Leuchtmittels entsteht an den beiden in Reihe geschalteten Vorwiderständen RV1, RV2 ein hochfrequenter Spannungsabfall. Dieser beträgt nach Erreichen der vollen Helligkeit etwa 4 Volt. Dieses Signal wird von D4 gleichgerichtet, damit C3 geladen und über das Zeitglied R2/C2 dem Regelvorverstärker-Transistor T2 zugeführt. T2 stellt den relativ hohen, durch den Widerstand R1 begrenzten Basisstrom der Regelendstufe dem Leistungstransistor T1 zur Verfügung. Die Dioden D1 und D2 stellen sicher, dass hier nur die positive Halbwelle des an den Kontakten 12,13 angelegten Wechselstroms an T1 anliegt. Die negative Halbwelle wird durch den in Figur 3 oberen Schaltkreis 30 entsprechend verarbeitet.

Bei l7i.mmerbetrieb wird die Betriebsfrequenz der Betriebselektronik üblicherweise erhöht, welches infolge des Hochpassverhaltens der R/C-Kombination zu einer geringeren, gleichgerichteten Hochfrequenzspannung führt. Bei Dimmung auf etwa 30 % beträgt die Hochfrequenzspannung nahezu 0 Volt. Infolge schalten die Transistoren T1, T2 nicht mehr durch und wird die Wendel eingeschaltet, da sie von dem Betriebsstrom durchflossen wird. Damit kann die Wendelspannung kontinuierlich mit der sich ändernden Frequenz eingestellt werden. Alternativ kann bei Betriebselektroniken mit konstanter Frequenz der Lampenstrom zur Auswertung herangezogen werden.

Bei der Schaltung nach Figur 3 sind zwei Sicherungen F1 F2 noch vorgesehen. Die Sicherung F1 sollte als Thermosicherung ausgelegt sein, die bei ca. 103°C abschalten muss. Insbesondere sollte diese Sicherung F1 mit einem der beiden Leistungstransistoren T1 des Schaltkreises 31 bzw. dem Leistungstransistor des Schaltkreises 30 thermisch gekoppelt sein, da diese sich bei Fehlern stark erwärmen können. Bei einem Kurzschluss löst die Feinsicherung F2 aus, beispielsweise bei einem Wert von mehr als 630 mA.

Bei unterbrochener Heizwendel des Leuchtmittels 23 versorgt der Kondensator C5 das zweite R/C-Glied, da ohne diesen Beipass die abgekoppelte R/C-Kombination keine Spannung liefern könnte. Eine Halbwelle würde demzufolge nicht abgeschaltet. Damit läge einer der beiden Leistungstransistoren T1 ständig im Betriebsstromkreis und würde der Netzspannung ca. 10 V entnommen und in Wärme umgesetzt. Dies führt zu einer verminderten Helligkeit und Überhitzung des entsprechenden Transistors T1. Ferner wird durch C5 ein Betrieb mit gebrochener Heizwendel ermöglicht und gegebenenfalls so ein defektes Leuchtmittel 23 wieder zum Leben erweckt.

Eine derartige Schaltung des Startmoduls 16 verbessert durch die vorgegebenen Zeitkonstanten in den Regelkreisen das Anlaufverhalten und wird damit ein übermäßiger Abbrand des emittierten Kathodenmaterials vermieden. Durch das Absenken der Betriebsspannung um ca. 20 V wird ein lampenschonender, sogenannter Softstart ausgelöst, durch den die Elektronik und das Leuchtmittel 23 geschützt werden. Darüber hinaus wird eine Heizspannung geliefert, die einen sicheren Start des Leuchtmittels 23 auch bei tieferen Temperaturen bis ca. -20°C sicherstellt.

Die Heizspannung wird während des Startvorganges auf ca. 10 V begrenzt und stabilisiert. Ferner kann durch Kurzschließen der Wendel der sogenannte Cut-Off-Betrieb sichergestellt werden, der für viele Leuchtmittel gewünscht wird. Durch die Auswertung der Betriebsfrequenz bzw. des Lainpenstroms können Sonderfunktionen wie eine Dimmung zuverlässig auch ausgeführt werden. Strom- und Spannungsspitzen werden von der Heizwendel des Leuchtmittels 23 ferngehalten, selbst bei Kurzschlüssen oder Netzüberspannungen. Ebenso werden bei eventuellen Kurzschlüssen durch die zusätzlichen Sicherungen F1,F2 die insbesondere steckbar ausgebildet auch für einen Laien leicht auswechselbar ausgebildet sein können, sowie bei andauernden Überlastungen oder Übertemperaturen Abschaltvorgänge eingeleitet und damit die Lampenanordnung nach der Erfindung geschützt.

Über die Verbindungen 24,25, bspw. ausgebildet durch eine Verkabelung, wird ein auf der proximalen Seite des Leuchtmittels 23 in einem axialen Distanzstück angeordnetes Sicherheitsmodul 17 mit der Betriebsspannung beaufschlagt.

Insbesondere enthält das Sicherheitsmodul 17 Thermosicherungen, durch ein Überhitzungsschutz sowohl der Elektronik als auch des Leuchtmittels 23 selbst gegeben ist. Darüber hinaus wird regelmäßig eine Überstromabschaltung vorgesehen sein, die bei einem eingangsseitigen, zu hohen Strom abschaltet. Auch werden Spannungsspitzen von dem Sicherheitsmodul 17 gekappt.

An das Sicherheitsmodul 17 schließt ein Filtermodul 18 an, dass in üblicher Weise über einen VDE-gerechten Y-Kondensator verfügt. Weiter weist das Filtermodul 18 zwei Kondensatoren 32,33 auf, die jeweils parallel zu den zwei Brückengleichrichterstrecken des Gleichrichter- und Spannungsstabilisierungsmoduls 19 geschaltet sind. Hierzu ist über Verbindungen 34,35 die gleichgerichtete Spannung von dem Gleichrichtermodul 19 an das Filtermodul 18 zurückgeführt und über die Kondensatoren 32,33 an die Eingangswechselspannung des Gleichrichter- und Spannungsstabilisierungsmoduls 19 angelegt.

Über Verbindungen 36,37 steht die gleichgerichtete Betriebsspannung an dem Modul 20 mit einem Rechteckgenerator an. Dieses Rechteckgenerator-Modul 20 verfügt über einen weiteren Anschluss 38, der bei Belegung mit einem elektrischen Signal einen Multivibrator 39 des Rechteckgenexators abschaltet.

Aus der hochfrequenten Rechteckspannung des Rechteckspannungsgenerator-Moduls 20 wird die Betriebs- und Zündspannung des Leuchtmittels 23 gewonzxen. Dies kann beispielsweise mittels eines Serien-Resonanzkreises erfolgen. Erfindungsgemaß ist jedoch ein Transformator 40 in dem Spannungstransformator-Modul 21 hierzu vorgesehen.

Ein Ausführungsbeispiel einer Transformatorschaltung ist in Figur 4 dargestellt. Die Frimärwickxungen 41 und die Sekundärwicklung 42, aufweisend ein Windungsverhältnis von 1:2, gegebenenfalls für andere Speisespannungen hiervon auch abweichende, sind in einer gegenüber einer Masse 44 ein Potential führenden Leitung 47, angedeutet durch den Rechteckimpuls, in Reihe geschaltet. Durch Aufwärtstransformation der Rechteckspannung wird die zündspannung erzeugt, damit die Gasentladung eingeleitet und geht das Leuchtmittel nach erfolgter Zündung in den Betriebszustand über. Zwischen den Wicklungen 41,42 ist ein kapazitiver Widerstand 43 gegen die Masse 44 geschaltet, der einer Strombegrenzung während des Startvorgangs dient. Ferner wird über diesen kapazitiven Widerstand 43 die exakte Einstellung des Brennstroms vorgenommen und werden Oberschwingungen gegen die Masse 44 abgeleitet.

Eine derartige Schaltung unter Verwendung eines Transformators 40 hat den Vorteil, dass ein Betrieb ohne Lampendrossel erfolgen kann, die üblicherweise Bestandteil eines Serienresonanz-Schwenkkreises ist, der für die Erzeugung der Zünd- und Brennspannung zumeist Verwendung findet, was, aufgrund des hohen Blindstroms, zu einer erheblichen Wärmebelastung führt.

Ausgangsseitig des Spannungstransformator-Moduls 21 liegt die Zünd- und Betriebsspannung, hier gem. Fig. 2 über ein Überspannungsschutz- und End of Live-Modul 22, an dem Leuchtmittel 23 an. Letzteres ist vorzugsweise auf die axial vorstehenden Kontakte 45,46 auf der proximalen Seite des Leuchtmittels 23 aufgesteckt und elektrisch angeschlossen.

Das Modul 22 begrenzt die Zündspannung und überwacht die Brennspannung. Erfolgt insbesondere keine Zündung des Leuchtmittels 23, beispielsweise weil das Ende seiner Lebensdauer erreicht ist, erfolgt eine Sicherheitsabschaltung über ein elektrisches Schaltsignal an dem Anschluss 38 des Multivibrators 39 des Rechteckgenerator-Moduls 20. Nach einer vorgebbaren Zeitspanne, beispielsweise 10 s, wird die Sicherheitsabschaltung wieder zurückgestellt.

Die anhand der weiteren Figuren erläuterte Leuchtmittelanordnung 50 weist zwei Distanzstücke 51,52 auf, die zum einen einer Längenanpassung eines Leuchtmittels 53, beispielsweise einer T5-Fluoreszenz-Langfeldleuchte, an die Längenabmessungen einer herkömmlichen Fassung für eine Leuchtstoffröhre, beispielsweise einer T12- oder T8-Leuchte, dienen, und zum anderen die unterschiedlichen elektrischen Anschlüsse der Leuchtmittel ausgleichen.

Wenn auch die Distanzstücke 51,52 unterschiedliche axiale Längen aufweisen, so ist doch deren konstruktiver Aufbau im wesentlichen identisch, da die axiale Länge jeweils im wesentlichen durch die einer Aufnahme für das Fassen des Leuchtmittels 53 bestimmt wird.

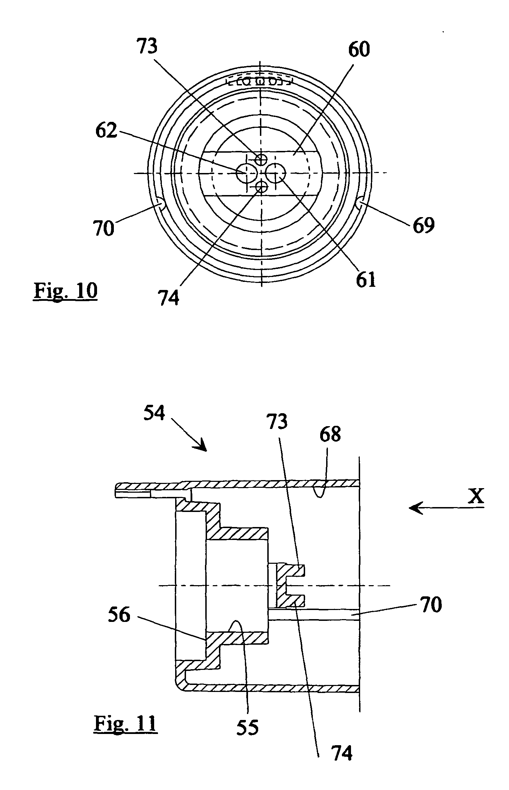

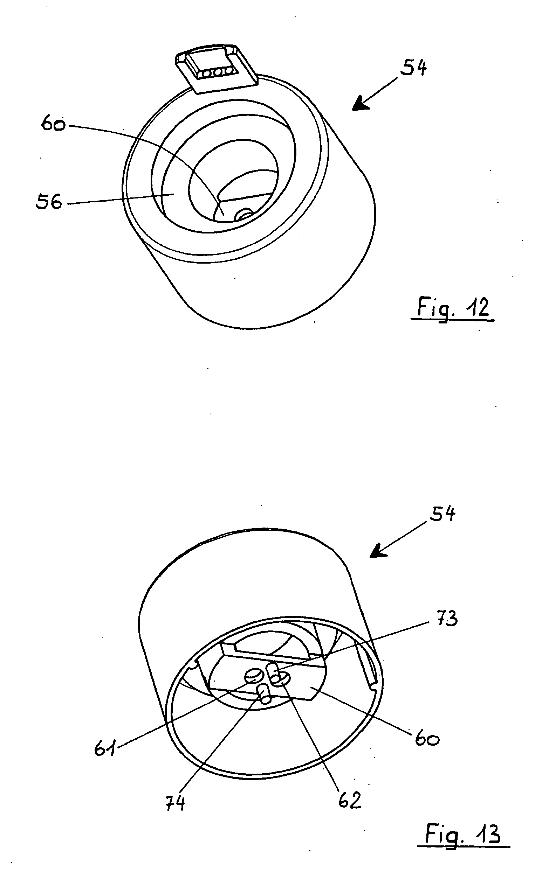

Die Figuren 10-13 zeigen eine solche Aufnahme 54 kurzer axialer Bauweise, insbesondere für den Anschluss an die distale Seite des Leuchtmittels 53. Die Aufnahme 54, bei dem Ausführungsbeispiel von kreisringförmigem Querschnitt, ist leuchtmittelseitig geschlossen mit der Ausnahme eines Aufnahmeraums 55, dessen Querschnitt dem des Leuchtmittels 53 im wesentlichen entspricht. Leuchtmittelseitig axial vorgelagert ist durch eine Querschnittsvergrößerung des Aufnahmeraums 55 eine Ringschulter 56 ausgebildet für die Anlage eines zentral gelochten Abdeckstopfens 57, vergleiche Figur 7, der mit einer Nut 58 für die Aufnahme eines Dichtungsrings 59 versehen ist. Insoweit kann die Anbindung des Leuchtmittels 53 wasser- bzw. explosionsgeschützt erfolgen.

Axial abgeschlossen ist der Aufnahmeraum 55 der Aufnahme 54 durch einen Steg 60, der mit zwei Durchbrechungen 61,62 versehen ist, durch die axial vorstehenden Kontaktstifte 63,64 des Leuchtmittels 53 hindurchgeführt werden. Die Kontaktstifte 63,64 des Leuchtmittels 53 sind, durch die Durchbrechungen 61,62 hindurchgeführt, in geeigneten, elektrischen Fassungen 66,67 auf einer Platine 65 für eine elektrische Verschaltung aufgenommen, wobei hier die Fassungen 66,67, die Kontaktstifte 63,64 radial einfassend, die Durchbrechungen 61,62 durchsetzen.

Der Innenwand 68 der Aufnahme 54 springen weiter Nasen 69,70 vor, die in entsprechenden Nuten 71,72 der Platine 65 eingreifen, so dass diese radial sicher und aufgrund der asymmetrischen Anordnung der Nasen 69,70 unverwechselbar gefangen ist. Die exakte axiale Positionierung stellen Abstandhalter 73,74 sicher, die dem Steg 60 axial vorstehen.

Auf der dem Leuchtmittel 53 gegenüberliegenden Seite der Platine 65 sind für den Anschluss in einer üblichen Fassung einer Leuchtstoffröhre zwei Kontaktsstifte 75,76 noch vorgesehen. Diese Kontaktstifte 75,76 durchsetzen Durchbrechungen 77,78 einer die Aufnahme 54 axial abschließenden Kappe 79, die mit ihrem axial vorstehenden Rand die Aufnahme 54 übergreift.

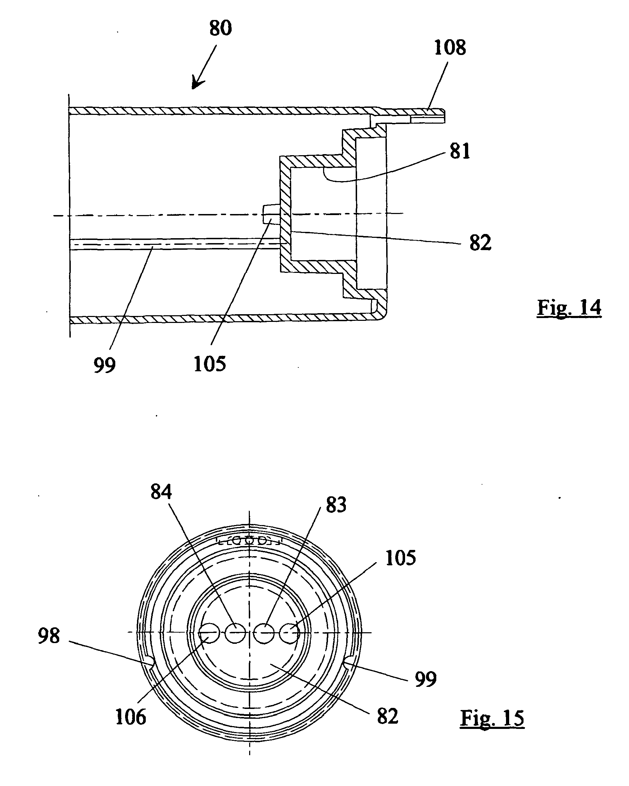

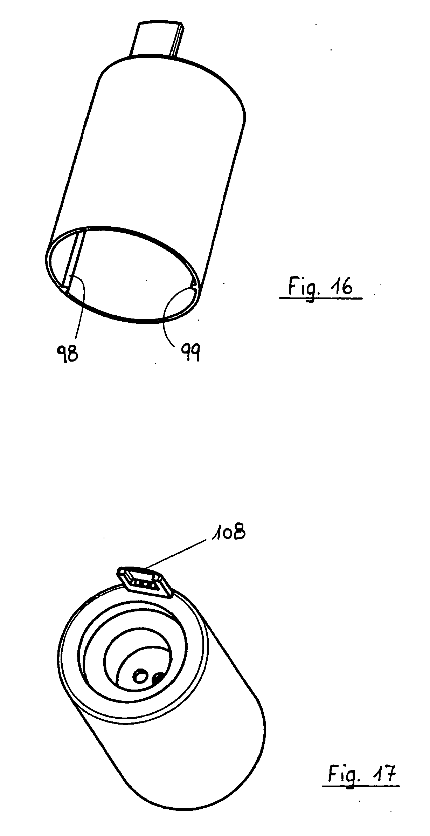

Die andernends des Leuchtmittels 53 vorgesehene Aufnahme 80, vergleiche Figuren 14-17, axial größerer Länge weist einen Aufnahmeraum 81 auf, dessen geschlossener Boden 82 wiederum mit zwei Durchbrechungen 83,84 für ein Hindurchführen der Kontaktstifte 85,86 des Leuchtmittels 53 versehen ist. Eine Abdichtung gegenüber dem Leuchtmittel 53 erfolgt wieder mit einem Dichtring 87, der in einer Nut 88 eines Abdeckstopfens 89 gefangen ist. Die Kontakte 85,86 des Leuchtmittels 53 sind bei dem Ausführungsbeispiel in die Durchbrechungen 83,84 durchsetzenden, buchsenartigen Fassungen 90,91 einer im wesentlichen H-förmig ausgebildeten Platine 92 gehalten, die auf ihrer abgewandten Seite wieder zwei Kontaktstifte 93,94 für ein Einsetzen in die Fassung einer Leuchtstoffröhre aufweist.

Abgeschlossen wird die Aufnahme 80 gleichfalls von einer diese überdeckenden Kappe 95, aufweisend zwei Durchbrechungen 96,97 für die Kontaktstifte 93,94.

Unsymmetrisch angeordnete Nasen 98,99 und entsprechende Nuten 100,101 in den scheibenförmigen Abschnitten 102,103 der Platine 92, die über ein rechteckiges Zwischenstück 104 verbunden sind, sowie Abstandhalter 105,106 sorgen für eine exakte und unverwechselbare Positionierung der Platine 92.

Durch die größere axiale Baulänge der Aufnahme 80 steht auf der Platine 92 ausreichend Platz zur Verfügung für den Aufbau einer Betriebselektronik. Es ist jedoch regelmäßig vorgesehen, dass auf der distalen Seite des Leuchtmittels 53 die Platine 65 die Elektronik eines Startmoduls aufnimmt. Die übrigen Module sind auf der Platine 92 aufgebaut. Dies erfordert eine elektrische Verschaltung der Platinen 65,92. Eine solche elektrische Verschaltung kann problemlos über ein Leuchtengehäuse auch erfolgen.

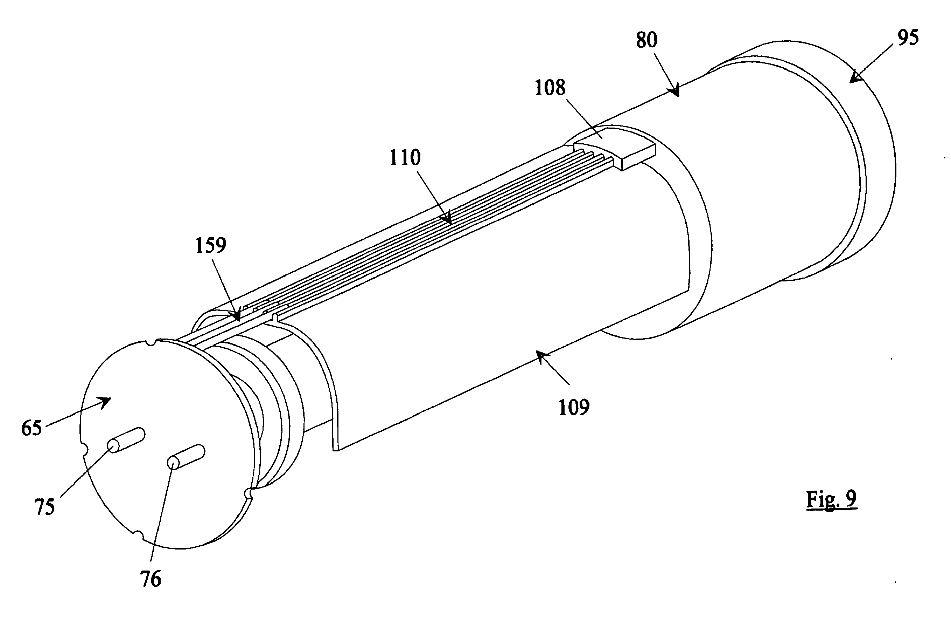

Bei dem Ausführungsbeispiel weisen allerdings die Aufnahmen 54,80 auf das Leuchtmittel 53 hinweisende, axial vorstehende Nasen 107,108 auf, die jeweils elektrische Anschlüsse in Form von Buchsen, Steckern oder einfache Durchbrüche für eine Verkabelung überdecken. Eine solche Verkabelung wird bei dem Ausführungsbeispiel über einen Reflektor 109 geführt. Für eine exakte Ausrichtung und einen sicheren elektrischen Anschluss der Drähte 159 der Verkabelung weist die Oberseite der Blende 109 rillenartige, die Drähte 159 vereinzelnd aufnehmend Führungen 110 auf, vgl. Fig. 9.

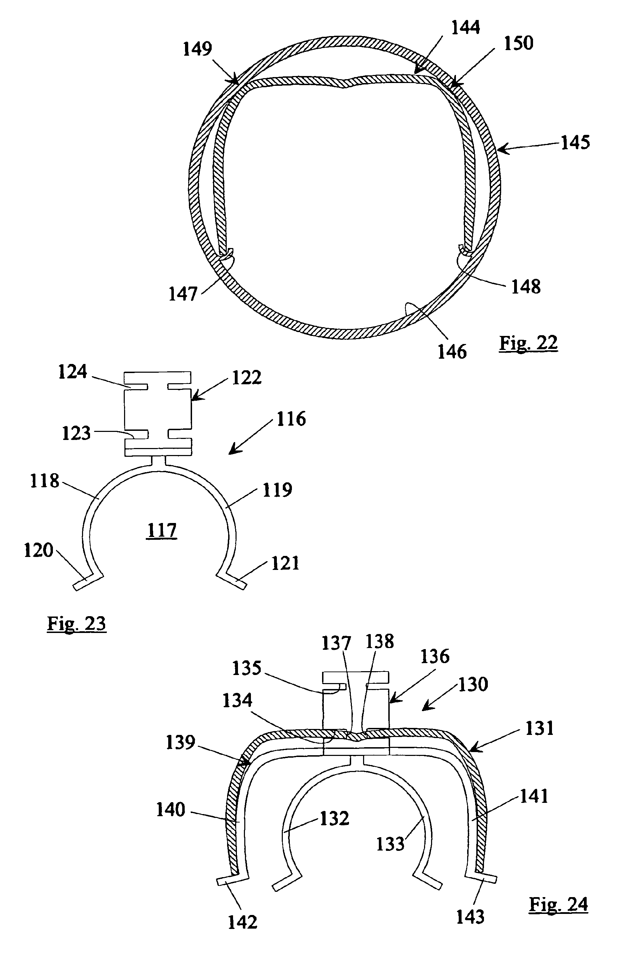

Figur 21 zeigt eine alternative Ausführungsform derartiger Führungen bei einem Reflektor 111, bei dem eine Führung 112 durch zwei Arme 113,114 erfolgt, die eine leicht ausgerundete Aufnahme 115 für eine klammerartige Aufnahme eines Kabels ausbilden. Derartige Führungen 110,112 können sich über die gesamte axiale Länge der Reflektoren 109 bzw. 111 erstrecken oder auch lediglich abschnittsweise ausgebildet sein, so dass dann eine Verkabelung frei auf den Oberseiten der Reflektoren 109, 111 dann verlaufen würde.

Ist oberseitig eines Reflektors keine Führung, jedoch eine Verkabelung vorgesehen, ist es zweckmäßig, wie in Figur 22 dargestellt, die Oberseite eines Reflektors radial einzuziehen, so dass dort durch die Geometrie des Reflektors selbst eine Art Führung ausgebildet wird.

Für die Festlegung von Reflektoren bietet sich eine Vielzahl von Möglichkeiten an. So können diese unmittelbar von den Aufnahmen 54,80 gehalten sein.

Bevorzugt erfolgt jedoch eine Halterung von Reflektoren 109 mittels auf das Leuchtmittel 53 aufzubringenden, klemmenartigen Halterungen 116, vergleiche auch Figur 23.

Derartige Halterungen sind ferner in der DE 20 2004 012 973 erläutert, deren Offenbarungsgehalt voll inhaltlich nachstehend übernommen wird.

Die Halterung 116 weist zwei federelastische, eine runde Aufnahme 117 für das Leuchtmittel 53 ausbildende Arme 118,119 auf. Diese Arme 118,119 sind an ihren freien Enden mit Abwinklungen 120,121 weiter versehen, so dass die Arme 118,119 in einfacher Weise zu spreizen sind, um das Leuchtmittel 53 freizugeben.

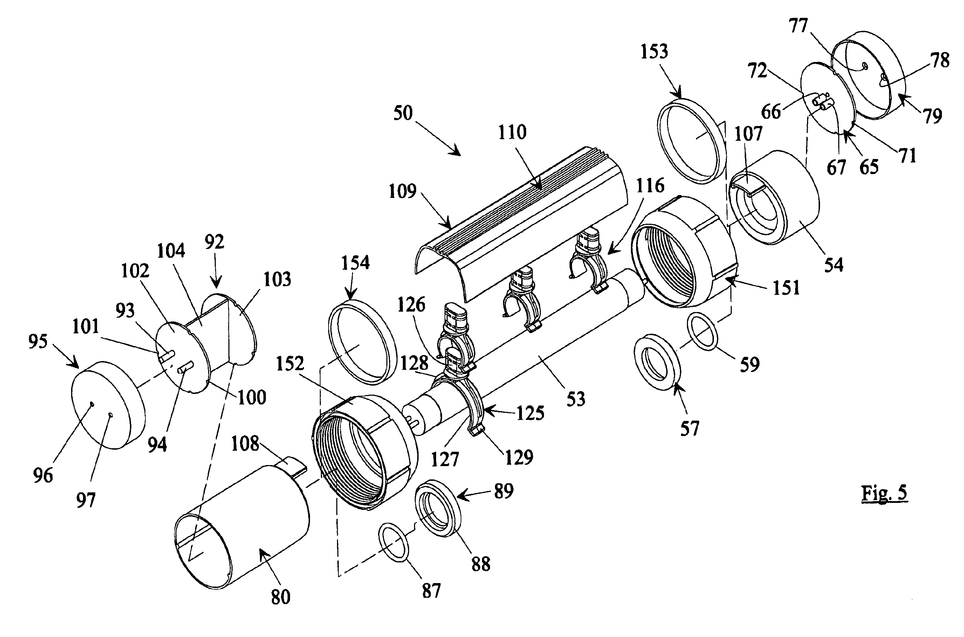

Oberseitig weist die Halterung 116 ein hutartiges Anschlussstück 122 auf für einen insbesondere lösbaren Anschluss an eine Blende 109. Dazu kann die Blende 109 unterseitig entsprechende Aufnahmen ausbilden für eine Aufnahme des Anschlussstückes 122. Figuren 5 und 22 zeigen Halterungen 116 mit im wesentlichen rechteckig ausgebildeten Anschlussstücken 122, die mit übereinander liegenden, verschiedene Abstände des Reflektors 109 gegenüber dem Leuchtmittel 53 ermöglichenden, zumindest abschnittsweise umlaufenden Nuten 123,124 versehen sind. Die Ausrichtung der größten Längsabmessung des Anschlussstücks 122 erfolgt bei Gebrauch quer zur Längserstreckung des Leuchtmittels bzw. der Blende 109. Ist die Blende 109 mit einem Längsloch, orientiert in Längserstreckung des Reflektors 109, versehen, kann das Anschlussstück 122 in das Längsloch eingesetzt und durch Drehen verriegelt werden, indem die Längsseiten des Langlochs in die Nuten 123 bzw. 124 eingreifen, vgl. auch Fig. 23.

Derartige Befestigungstechniken können auch dazu herangezogen werden, einen Reflektor 109 auf Abstand von dem Leuchtmittel 53 zu halten, wobei eine Spreizvorrichtung 125 mit einem Anschlussstück 126 versehen in voranstehend erläuterter Weise mit dem Reflektor 109 verriegeln kann. Dabei kann dass Anschlussstück 126 über dem leuchtmittel oder sich auf diesem abstützend angeordnet sein. Von dem Anschlussstück 126 abgespreizte Arme 127,128 halten den Reflektor 109 fern von dem Leuchtmittel 53 und untergreifen den Reflektor 109 mit Abwinklungen 129.

Figur 24 zeigt eine Halterung 130 für ein Festlegen eines Reflektors 131 mittel zweier Arme 132,133 an einem Leuchtmittel. Auch die Halterung 130 verfügt über ein mit Nuten 134,135 versehenes Anschlussstück 136, bei dem wie dargestellt, die Längsseiten 137,138 eines Langlochs in der Oberseite des Reflektors 131 in der Nut 134 verriegeln.

Eine Spreizvorrichtung 139 kann mit der Halterung 130 unmittelbar kombiniert sein oder gegebenenfalls für sich in gleicher Art an dem Reflektor 131 festgelegt sein. Die Spreizvorrichtung 139 hält mit den Armen 140,141 den Reflektor 131 auf Distanz und untergreift diesen mit endseitigen Abwinklungen 142,143.

Ein Reflektor 144, ein in Figur 22 nicht dargestelltes Leuchtmittel überdeckend, kann problemlos innerhalb eines transparenten Schutzrohres 145 auch angeordnet sein. Dabei ist von Vorteil, wenn der Reflektor 144 oberseitig eingezogen ist. Stützt sich der Reflektor 144 auf der Innenwand 146 vorspringenden Nasen 147,148 unverdrehbar ab, so wird er in den oberen Bereichen 149,150, durch die Pfeile angedeutet, in Anlage an der Innenseite 146 gehalten werden, womit eine sehr stabile Anordnung von Reflektor 144 und Schutzrohr 145 gegeben ist.

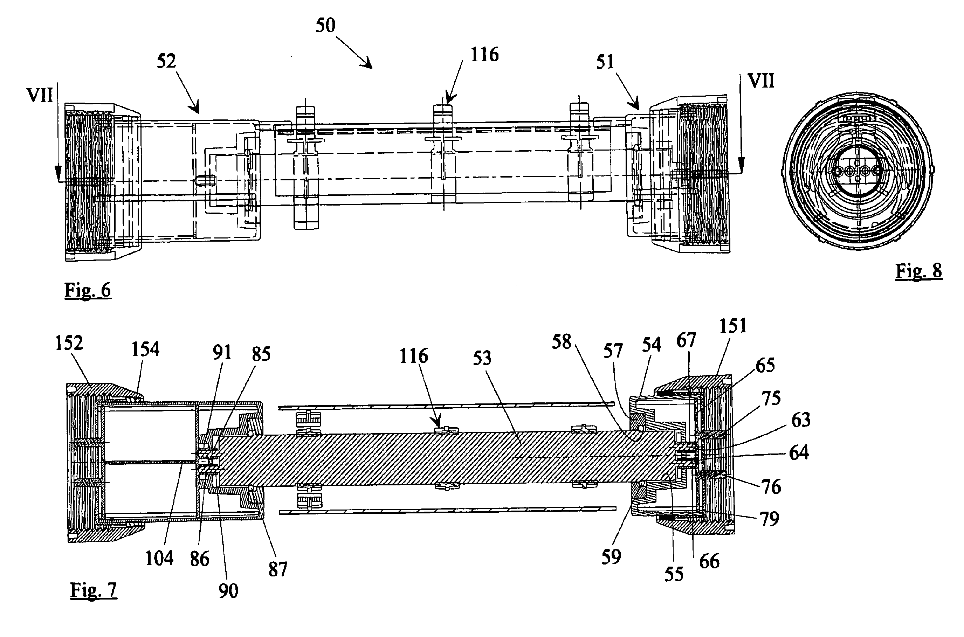

Bei dem Ausführungsbeispiel nach den Figuren 5-8 wurde eine wasser- bzw. explosionsgeschützte Anbindung des Leuchtmittels 53 an die Aufnahmen 54,80 erläutert. Eine solche wasser- bzw. explosionsgeschützte Anbindung der Lampenanordnung 50 an zwei Leuchtstoffröhrenfassung erfolgt durch zwei Überwurfmuttern 151,152, die mit der Leuchtstoffröhrenfassung unter Einbindung zweier Flachdichtringe 153,154 mit einer entsprechenden Fassung einer Leuchtstoffröhre zu verschrauben sind.

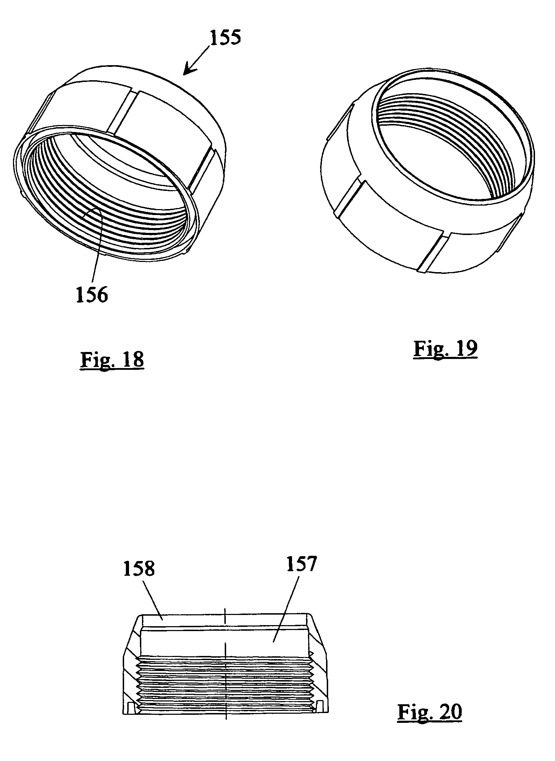

Hierzu weist eine Überwurfmutter 155 einen Abschnitt mit einem entsprechenden Innengewinde 156 auf, der auf ein entsprechendes Außengewinde einer Leuchtstoffröhrenfassung abgestimmt ist, vgl. Fig. 18 bis 20.

Andernends der Überwurfmutter 155 ist ein gewindeloser Abschnitt 157 vorgesehen, dessen Abmessungen für eine dichtende Aufnahme der Flachdichtringe 153,154 bemessen ist. Axial außenliegend ist eine radial nach innen vorspringende Nase 158, die Flachdichtringe 153,154 übergreifend, noch ausgebildet, so dass diese auch bei einem Verschrauben der Überwurfmuttern 151,152 sicher abdichtend gehalten sind.

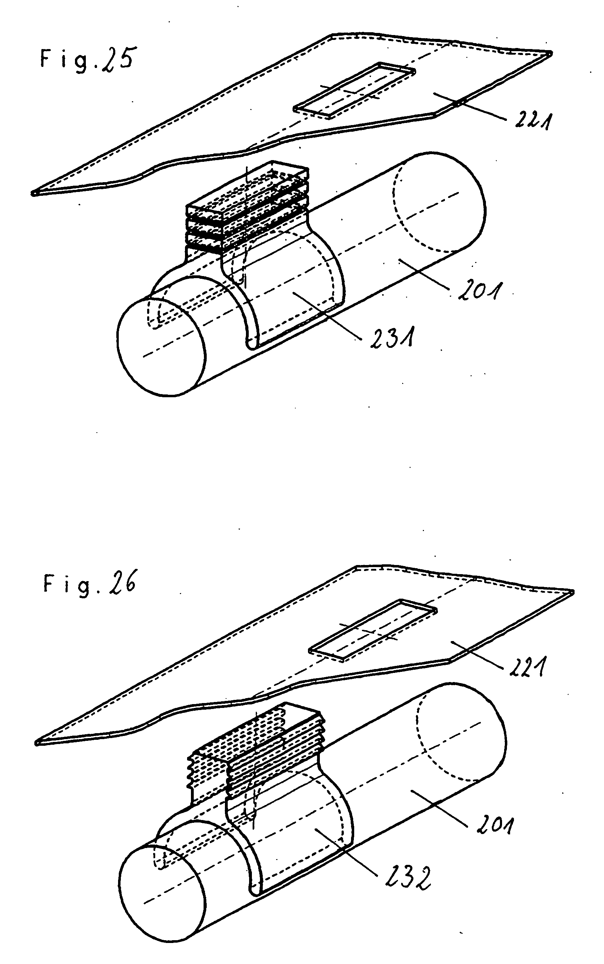

Gemäß einer weiteren Ausgestaltung der Halterung nach der Erfindung, vgl. Fig. 25 und Fig. 26, ist die Halterung zur Aufnahme des Reflektors 221 je als einstückige Klipp-Halterung ausgeführt, deren Schaft zur Aufnahme des Reflektors als Schlitz- oder als Rastaufnahme ausgebildet ist. Werkstoff und Geometrie der Halterung sind so zu wählen, dass ihr Sitz auf der zylinderförmigen Anordnung, dem Lampenkolben 201, gewährleistet ist.

Bei der Schlitzaufnahme, Fig. 25, wird die Halterung 231 in die Rechtecklochung des Reflektors 221 höhengerecht gesteckt und durch eine 90°-Drehung befestigt.

Bei der Rastaufnahme, Fig. 26, wird die Halterung 232 in die Rechtecklochung des Reflektors 221 - entsprechend der gewünschten Höhe - gesteckt.

Die Halterungen 231 und 232 sind fertigungstechnisch einfach herzustellen und kommen mit den wenigsten Bauteilen bei guter Funktion aus.

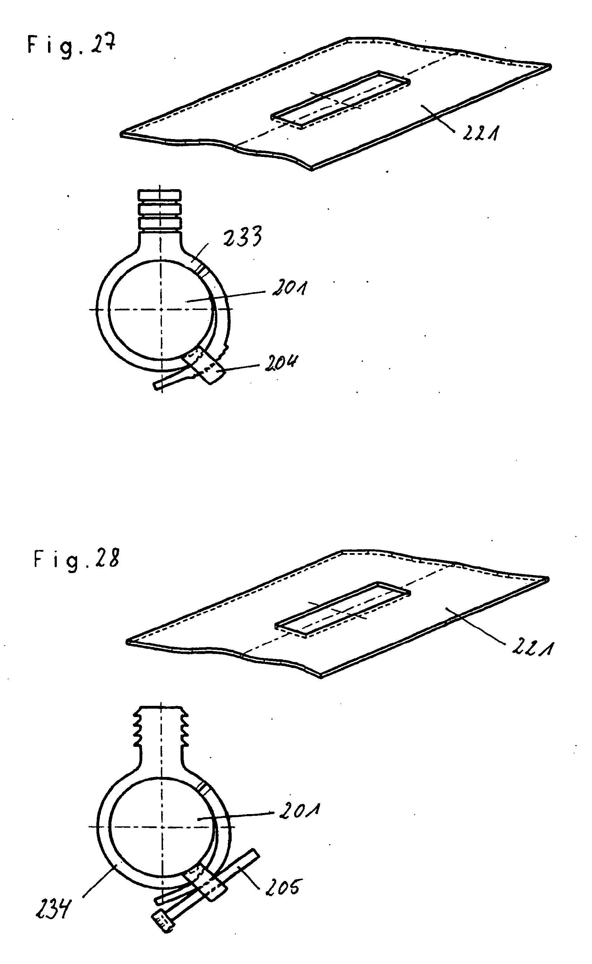

In einer weiteren bevorzugten Ausführungsform nach Fig. 27 wird eine einstückige Rast-Halterung 233 mit Schlitzaufnahme für Reflektor mit Rechtecklochung 221 vorgeschlagen. Die Aufnahme des Reflektors erfolgt wie in Fig. 25. Die Halterung der Halterung auf der zylinderförmigen Anordnung, des Lampenkolbens 201, erfolgt vorzugsweise ähnlich eines Kabelbinders, über ineinander gesteckte, rastende Kunststofflaschen 204.

Eine weitere Ausgestaltung der Erfindung sieht vor, Fig.28, die Halterung der einstückigen Schraub-Halterung 234 mit Rastaufnahme für Reflektor mit Rechtecklochung auf der zylinderförmigen Anordnung, des Lampenkolbens 1, vorzugsweise ähnlich einem Schraub-Spannband, durch ineinander gesteckte, zu verschraubende Kunststofflaschen 205 auszubilden. Die Aufnahme des Reflektors erfolgt wie in Fig. 26.

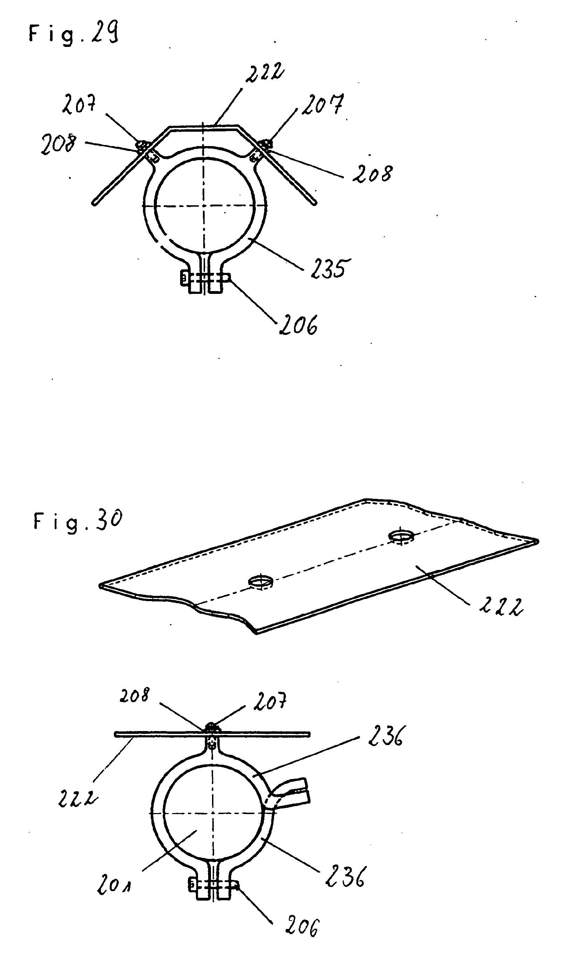

Gemäß einer weiteren Ausgestaltung der Halterung nach der Erfindung, Fig. 29, wird die Halterung als einstückige Schellen-Halterung 235 mit Schraubbefestigung 207, 208 für Reflektor mit Bohrung 222 ausgeführt. Dabei werden die Schenkel der als Schelle ausgeführten Halterung um die zylinderförmige Anordnung 201 gelegt und auf Spannung verschraubt 206.

Die einstückigen Halterungen 233, 234 und 235 weisen sich durch einen stabilen Halt auf der zylindrischen Anordnung aus.

Eine weitere Ausprägung der erfindungsgemäßen Anordnung, Fig. 30, sieht eine zweistückige Schellen-Halterung 236 mit Haken- und Schraubbefestigung 207, 208 für Reflektor mit Bohrung 222 vor. Dabei werden die verhakten Schenkel der als Schelle ausgeführten Halterung um die zylinderförmige Anordnung 201 gelegt und auf Spannung verschraubt 206.

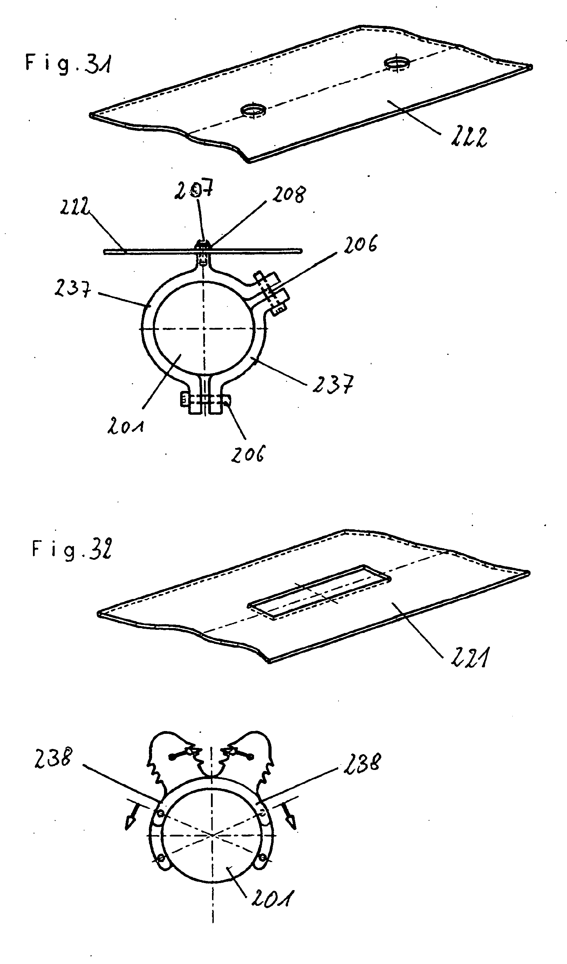

Gemäß einer weiteren Ausführung der erfindungsgemäßen Anordnung, Fig. 31, wird eine zweistückige Schellen-Halterung 237 mit Schraubbefestigung 207, 208 für Reflektor mit Bohrung 222 vorgestellt, deren Schenkel unter Spannung verschraubt 206 sind. Die Aufnahme des Reflektors erfolgt wie in Fig. 30.

Die Halterungen 236 und 237 zeichnen sich durch einfache und sichere Montage aus. Schraubbefestigungen für Reflektoren, hier insbesondere die Halterungen 235, 236 und 237, erlauben die beste optische Einstellbarkeit.

Ebenfalls ist nach Fig. 32 eine zweistückige Klipp-Halterung 238 mit Rastaufnahme für Reflektor mit einer Rechtecklochung 221 gegeben, wobei die beiden, je einseitig gegenläufig verkürzten Schenkel ineinander gleitend verbunden sind und, bei in Deckung gebrachten Schäften, einerseits die Rastaufnahme des Reflektors möglich ist, wie Fig. 28, und andererseits die Schenkel in ihrer Gesamtheit eine größere Umfassung der zylindrischen Anordnung, des Lampenkolbens 201, bilden. Der vorteil der Anordnung liegt - trotz guter Handhabung - in der umfassenderen Umklammerung der zylindrischen Anordnung 201.

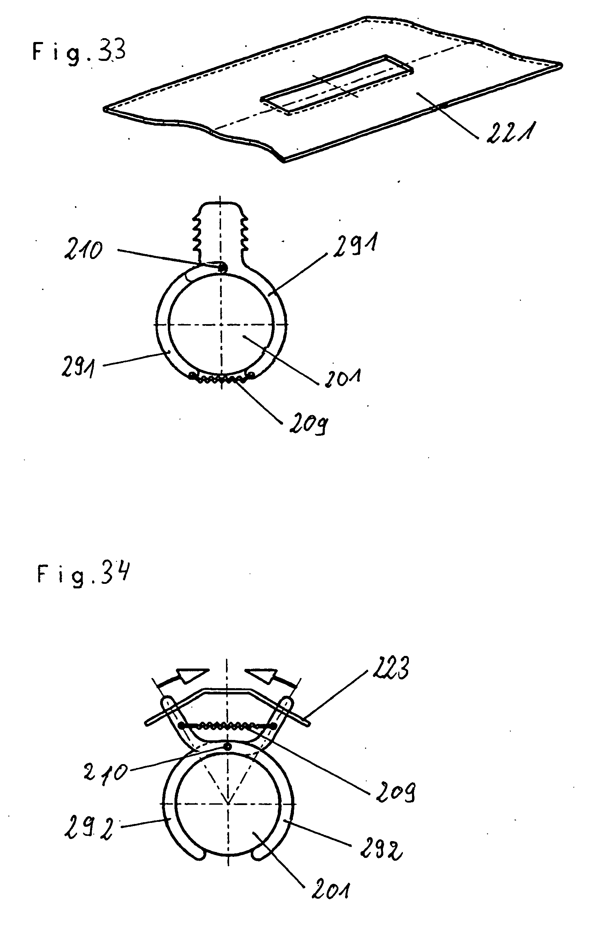

Gemäß einer weiteren Ausführungsform der Erfindung, Fig. 33, wird eine zweistückige Klapp-Halterung 291 vorgestellt, deren Schenkel über ein Gelenk 210 miteinander verbunden sind und mittels Feder 209 um die zylindrische Anordnung, den Lampenkolben 201, gespannt werden, und dessen Rastaufnahme für Reflektor mit Rechtecklochung 221 vorgesehen ist. Der Anbringungsort der Feder 209 kann auch oben seitlich erfolgen oder in das Gelenk 210 integriert werden. Die Aufnahme des Reflektors 221 erfolgt wie in Fig. 30. Die Feder 209 sorgt für einen langfristig guten Sitz der Halterung 291 auch bei Materialermüdungen.

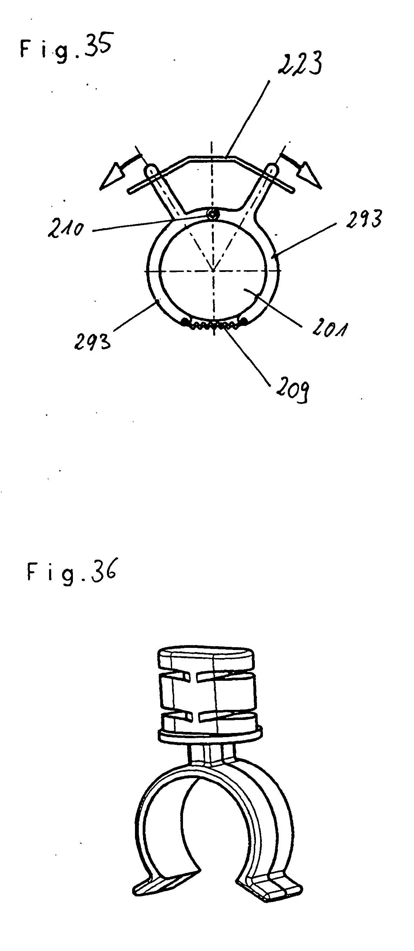

Weitere Ausprägungen der Erfindung, Fig. 34 und Fig. 35, sehen je eine zweistückige Klapp-Halterung 292 mit Feder 209 und Druck-Spannaufnahme, Fig. 30, sowie eine zweistückige Klapp-Halterung 293 mit Feder 209 und Zug-Spannaufnahme, Fig. 35, für je einen Reflektor mit Lochung 223 vor. Die Schenkel sind stets so ausgeprägt und in einem Gelenk 210 gelagert und durch Federzug gespannt, dass der Reflektor einmal auf Druck, Fig. 34, und einmal auf Zug, Fig. 35, gehalten wird. Der Anbringungsort der Feder 209 kann auch oben seitlich erfolgen oder in das Gelenk 210 integriert werden. Bei diesen Anordnungen sind keine weiteren Hilfsmittel für die Befestigung des Reflektors erforderlich.

Fig. 36 zeigt eine bevorzugte Ausführungsform einer einstückigen Halterung mit einer Aufnahme. Diese Halterung ist abgeleitet aus den Entwürfen der Halter 231 und 232 der Fig. 25 und Fig. 26. Die Höhenverstellbarkeit des Reflektors kann durch Vervielfachung und Anbringung weiterer Aufnahmen erreicht werden.

Durch die Variation nach dem Baukasten-Prinzip, Anbringungsart des Reflektors, x-Stückigkeit der Halterung und Montageart der Halterung sind weitere Ausprägungsformen des Adapters denkbar.

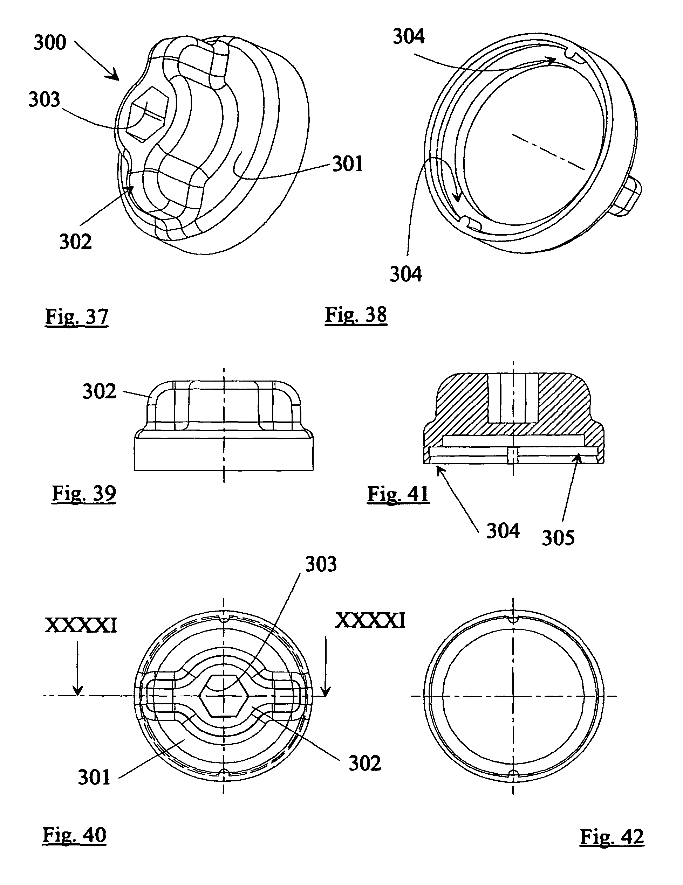

Die Figuren 37 bis 42 zeigen ein gesondert ausgebildetes Gehäuse für die Überdeckung bzw. Aufnahme einer Kurzschlussbrücke. Das Gehäuse 300 ist vergleichsweise flach bauend, schalenartig ausgebildet und auf seiner Oberseite 301 mit einem Knebel 302 versehen, der die Handhabbarkeit bei einem drehenden Einsetzen auf bzw. in die Fassung eines Starters erleichtert.

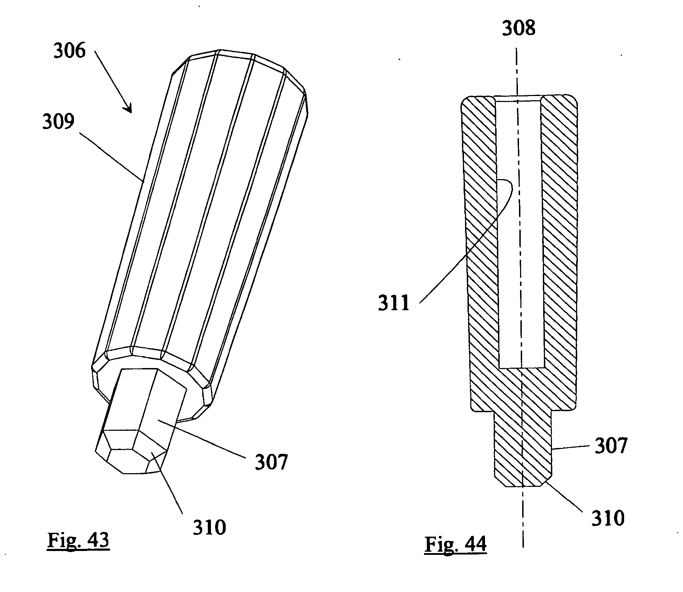

Mittig ist der Knebel 302 mit einer Ausnehmung 303 von regelmäßigem sechseckigen Querschnitt für eine verdrehsichere Aufnahme eines Sechskants, bspw. gem. der Figuren 43 und 44.

Sämtliche Kanten oder Ecken auf der Oberseite 301 des Gehäuses 300 sind ab- bzw. ausgerundet, so dass scharfe Kanten vermieden und ein Verletzungsrisiko minimiert ist.

Innerhalb oder außerhalb des Gehäuses 300, unterseitig, sind Verriegelungselemente 304 für ein Verriegeln mit der leuchtenfesten Aufnahme des Starters vorgesehen werden, deren Ausbildung durch die Art der Starteraufnahme bestimmt ist.

Auch kann das Gehäuse 300 mit einer Aufnahme 305 versehen sein, die die elektrisch leitende Kurzachlussbrücke berührungssicher aufnimmt. Darüberhinaus wird eine von dem Gehäuse 300 aufgenommene Kurzschlussbrücke mit Einsetzen des Gehäuses 300 in oder auf die Fassung des Starters exakt positioniert.

Für das positionieren und Einsetzen des Gehäuses 300 ist ein Werkzeug 306 gem. der Fig. 43 und 44 noch vorgesehen, dass über einen Sechskant 307 verfügt, der mit seinem Querschnitt exakt auf die Ausnehmung 303 abgestimmt ist. Dieser Sechskant 307 ist bei dem Ausführungsbeispiel auf der Mittelachse 308 eines vieleckigen Hefts 309 angeordnet und ist an seinem freien Ende mit einer Abschrägung 310 versehen, so dass er leicht in die Ausnehmung 303 in dem Knebel 302 eingeführt werden kann. Um Material einzusparen ist bei dem Ausführungsbeispiel das Heft 309 des Werkzeugs 306 mit einem zentralen Freiraum 311 versehen.

### Bezugezeichenliste:

- 1.: Leuchtmittelanordnung
- 2.: Leuchtstoffröhrenfassung
- 3.: Leuchtstoffröhrenfassung
- 4.: Leuchtmittel
- 5.: Distanzstück
- 6.: Distanzstück
- 7.: Mittelebene
- 8.: Längsachse
- 9.: Betriebselektronik
- 10.: Anschluß
- 11.: Anschluß
- 12.: Kontakt
- 13.: Kontakt
- 14.: Starter
- 15.: Kurzschlussbrücke
- 16.: Startmodul
- 17.: Sicherheitsmodul
- 18.: Filtermodul
- 19.: Gleichrichter- und Spannungsstabilisierungsmodul
- 20.: Rechteckgenerator-Modul
- 21.: Spannungstransforzlnaator-Modul
- 22.: Überspannungsschutz- und End of Live-Modul
- 23.: Leuchtmittel
- 24.: Verbindung
- 25.: Verbindung
- 26.: Kontakt
- 27.: Kontakt
- 28.: Anschluß
- 29.: Anschluß
- 30.: Schaltkreis
- 31.: Schaltkreis
- 32.: Kondensator
- 33.: Kondensator
- 34.: Verbindung
- 35.: Verbindung
- 36.: Verbindung
- 37.: Verbindung
- 38.: Anschluß
- 39.: Multivibrator
- 40.: Transformator
- 41.: Primärwicklung
- 42.: Sekundärwicklung
- 43.: kapazitiver Widerstand
- 44.: Masse
- 45.: Kontakt
- 46.: Kontakt
- 47.: Leitung
- 48.:
- 49.:
- 50.: Leuchtmittelanordnung
- 51.: Distanzstück
- 52.: Distanzstück
- 53.: Leuchtmittel
- 54.: Aufnahme
- 55.: Aufnahmeraum
- 56.: Ringschulter
- 57.: Abdeckstopfen
- 58.: Nut
- 59.: Dichtungsring
- 60.: Steg
- 61.: Durchbrechung
- 62.: Durchbrechung
- 63.: Kontaktstift
- 64.: Kontaktstift
- 65.: Platine
- 66.: Fassung
- 67.: Fassung
- 68.: Innenwand
- 69.: Nase
- 70.: Nase
- 71.: Nut
- 72.: Nut
- 73.: Abstandhalter
- 74.: Abstandhalter
- 75.: Kontaktstift
- 76.: Kontaktstift
- 77.: Durchbrechung
- 78.: Durchbrechung
- 79.: Kappe
- 80.: Aufnahme
- 81.: Aufnahmeraum
- 82.: Boden
- 83.: Durchbrechung
- 84.: Durchbrechung
- 85.: Kontaktstift
- 86.: Kontaktstift
- 87.: Dichtring
- 88.: Nut
- 89.: Abdeckstopfen
- 90.: Fassung
- 91.: Fassung
- 92.: Platine
- 93.: Kontaktstift
- 94.: Kontaktstift
- 95.: Kappe
- 96.: Durchbrechung
- 97.: Durchbrechung
- 98.: Nase
- 99.: Nase
- 100.: Nut
- 101.: Nut
- 102.: Abschnitt
- 103.: Abschnitt
- 104.: Zwischenstück
- 105.: Abstandhalter
- 106.: Abstandhalter
- 107.: Nase
- 108.: Nase
- 109.: Reflektor!
- 110.: Führung
- 111.: Reflektor!
- 112.: Führung
- 113.: Arm
- 114.: Arm
- 115.: Aufnahme
- 116.: Halterung
- 117.: Aufnahme
- 118.: Arm
- 119 .: Arm
- 120.: Abwinklung
- 121.: Abwinklung
- 122.: Anschlussstück
- 123.: Nut
- 124.: Nut
- 125.: Spreizvorrichtung
- 126.: Anschlussstück
- 127.: Arm
- 128.: Arm
- 129.: Abwinklung
- 130.: Halterung
- 131.: Reflektor
- 132.: Arm
- 133.: Arm
- 134.: Nut
- 135.: Nut
- 136.: Anschlussstück
- 137.: Längsseite
- 138.: Längsseite
- 139.: Spreizvorrichtung
- 140.: Arm
- 141.: Arm
- 142.: Abwinklung
- 143.: Abwinklung
- 144.: Reflektor
- 145.: Schutzrohr
- 146.: Innenwand
- 147.: Nase
- 148.: Nase
- 149.: Abschnitt
- 150.: Abschnitt
- 151.: Überwurfmutter
- 152.: Überwurfmutter
- 153.: Flachdichtring
- 154.: Flachdichtring
- 155.: Überwurfmutter
- 156.: Innengewinde
- 157.: Abschnitt
- 158.: Nase
- 159.: Draht
- 201.: Lampenrohr
- 202.: Reflektor
- 203.: Halterung
- 204.: Rast-Halterung
- 205.: Schraub-Spanner
- 206.: Schellen-Spanner
- 207.: Schraube
- 208.: Unterlegscheibe
- 209.: Feder
- 210.: Gelenk
- 221.: Reflektor mit Rechtecklochung
- 222.: Reflektor mit Bohrung
- 223.: Reflektor mit Lochung
- 231.: Einstückige Klipp-Halterung mit Schlitzaufnahme
- 232.: Einstückige Klipp-Halterung mit Rastaufnahme
- 233.: Einstückige Rast-Halterung mit Schlitzaufnahme
- 234.: Einstückige Schraub-Halterung mit Rastaufnahme
- 235.: Einstückige Schellen-Halterung mit Schraubbefestigung
- 236.: Zweistückige Schellen-Schellenhalterung mit Haken- und Schraubbefestigung
- 237.: Zweistückige Schellen-Halterung mit Schraubbefestigung
- 238.: Zweistückige Klipp-Halterung mit Rastaufnahme
- 291.: Zweistückige Klapp-Halterung mit Feder und Rastaufnahme
- 292.: Zweistückige Klapp-Halterung mit Feder und Druck-Spannaufnahme
- 293.: Zweistückige Klapp-Halterung mit Feder und Zug-Spannaufnahme
- 300.: Gehäuse
- 301.: Oberseite
- 302.: Knebel
- 303.: Ausnehmung
- 304.: Verriegelungselement
- 305.: Aufnahme
- 306.: Werkzeug
- 307.: Sechskant
- 308.: Mittelachse
- 309.: Heft
- 310.: Abschrägung
- 311.: Freiraum

- C1 - C5: Kondensator
- RV1-RV2: Vorwiderstand
- D1 - D4: Diode
- T1 - T2: Transistor
- R1 - R3: Widerstand
- F1 - F2: Sicherung

## Patentansprüche

1. Leuchtmittelanordnung mit einer Betriebselektronik (9) in Distanzstücken (5, 6), für ein axial sich erstreckendes Leuchtmittel, das endseitig mit elektrischen Steckanschlüssen versehen ist und in den axialen, die Betriebselektronik aufnehmenden Distanzstücken gefangen ist für einen Einsatz zwischen zwei vorhandenen Leuchtstoffröhrenfassungen, **dadurch gekennzeichnet, dass** die Betriebselektronik (9) ein Startmodul (16) für einen Anschluss an die distale Seite des Leuchtmittels (23) aufweist, ein an das Startmodul (16) angeschlossenes Sicherheitsmodul (17), daran anschließend ein Filtermodul (18), ein Gleichrichter- und Spannungsstabilisierungsmodul (19), ein Rechteckgenerator-Modul (20), ein Spannungstransformator-Modul (21) und abschließend angeschlossen an die proximale Seite des Leuchtmittels (23) ein Überspannungsschutz- und End of Live-Modul (22).

2. Anordnung nach Anspruch 1, **dadurch gekennzeichnet, dass** eine Kurzschlussbrücke (15) der Anordnung die Kontakte einer vorhandenen Fassung eines Starters (14) einer Leuchtstofflampenfassung überbrückt und dass die Kurzschlussbrücke von einem gesondert ausgebildeten Gehäuse überdeckt wird.

3. Anordnung nach einem oder mehreren der vorangehenden Ansprüche, **dadurch gekennzeichnet, dass** das Startmodul (16) während des Startvorgangs die Betriebsspannung herabsetzt und/oder dass das Startmodul (16) erst nach dem Zünden des Leuchtmittels (23) die volle Betriebsspannung an das Sicherheitsmodul (17) anlegt.

4. Anordnung nach einem oder mehreren der vorangehenden Ansprüche, **dadurch gekennzeichnet, dass** das Startmodul (16) an den distalen Anschlüssen (28,29) des Leuchtmittels (23) den fließenden Strom überwacht.

5. Anordnung nach einem oder mehreren der vorangehenden Ansprüche, **dadurch gekennzeichnet, dass** das Sicherheitsmodul (17) eine Thermosicherung aufweist.

6. Anordnung nach einem oder mehreren der vorangehenden Ansprüche, **dadurch gekennzeichnet, dass** von dem Gleichrichter- und Spannungsstabilisierungsmodul (19) eine gleichgerichtete Spannung an das Filtermodul (18) rückgeführt ist.

7. Anordnung nach einem oder mehreren der vorangehenden Ansprüche, **dadurch gekennzeichnet, dass** das Rechteckgenerator-Modul (20) die von dem Gleichrichter- und Spannungsstabilisierungsmodul (19) gelieferte Gleichspannung mittels eines Multivibrators (39) in eine hochfrequente Rechteckspannung umsetzt.

8. Anordnung nach Anspruch 7, **dadurch gekennzeichnet, dass** der Multivibrator (39) mittels eines elektrischen Schaltsignals abschaltbar ist.

9. Anordnung nach einem oder mehreren der vorangehenden Ansprüche, **dadurch gekennzeichnet, dass** die Zünd- und Brennspannung des Leuchtmittels (23) von einem Transformator (40) des Spannungstransformator-Moduls (21) bereitgestellt wird.

10. Anordnung nach Anspruch 7, **dadurch gekennzeichnet, dass** eine Sicherheitsabschaltung des Überspannungsschutz- und End of Live-Moduls (22) ein elektrisches Schaltsignal an den Multivibrator (39) liefert, das diesen abschaltet, wenn keine Zündung des Leuchtmittels (23) erfolgt ist.

11. Anordnung nach einem oder mehreren der vorangehenden Ansprüche, **dadurch gekennzeichnet, dass** ein axiales Distanzstück (51) mehrteilig aufgebaut ist mit einer das Leuchtmittel (53) einerends in einem Aufnahmeraum (55) aufnehmenden Aufnahme (54) und andernends einer die Aufnahme (54) abschließenden Kappe (79).

12. Anordnung nach Anspruch 11, **dadurch gekennzeichnet, dass** axial außen vor dem Aufnahmeraum (55) liegend durch eine Querschnittsvergrößerung dieser Ausnehmung eine Ringschulter (56) ausgebildet ist, dass gegen die Ringschulter (56) ein Abdeckstopfen (57) gesetzt ist und dass der Abdeckstopfen (57) eine radial außen liegende Nut (58) aufweist, in der ein gegen das Leuchtmittel (53) abdichtender Dichtungsring (59) gefangen ist.

13. Anordnung nach einem oder mehreren der vorangehenden Ansprüche, **dadurch gekennzeichnet, dass** ein Distanzstück (51,52) in einer Überwurfmutter (155) gehalten ist, die einerends ein Innengewinde (156) aufweisend mit einem Außengewinde einer Leuchtstoffröhrenfassung verschraubbar ist.

14. Anordnung nach Anspruch 13, **dadurch gekennzeichnet, dass** andernends die Überwurfmutter (155) einen gewindelosen Abschnitt (157) aufweist, der einen auf die Aufnahme (54,80) aufgebrachten Flachdichtring (153,154) überdeckt.

15. Anordnung nach Anspruch 14, **dadurch gekennzeichnet, dass** der Flachdichtring (153,154) von einer Nase (158) der Überwurfmutter (155) übergriffen wird.

16. Anordnung nach einem oder mehreren der vorangehenden Ansprüche, **dadurch gekennzeichnet, dass** in einer Aufnahme (54) der Distanzstücke wenigstens ein elektronischens Modul auf einer Platine (65) aufgebaut ist, dass der Innenwand (68) der Aufnahme (54) Nasen (69,70) vorstehen, die mit Nuten (71,72) in einem der inneren Geometrie der Aufnahme (54) entsprechenden Abschnitt der Platine (65) für ein unverwechselbares Einbringen korrespondieren.

17. Anordnung nach einem oder mehren der vorangehenden Ansprüche, **dadurch gekennzeichnet, dass** beide ein Leuchtmittel (53) einfassende Aufnahmen (54,80) der Distanzstücke wenigstens ein elektronisches Modul aufweisen, dass die Aufnahmen (54,80) axial auf das Leuchtmittel (53) vorstehende Nasen (107,108) aufweisen, die für eine Verkabelung der Module vorgesehene Durchbrechungen und/oder Kontaktmittel überdecken.

18. Anordnung nach einem oder mehreren der vorangehenden Ansprüche, **dadurch gekennzeichnet, dass** oberseitig eines Reflektors (109) Führungen (110) für eine Verkabelung der Module vorgesehen sind.

19. Anordnung nach Anspruch 18, **gekennzeichnet durch** eine an dem Reflektor (109) und/oder dem Leuchtmittel (53) festgelegte, den Reflektor (109) von dem Leuchtmittel (53) fernhaltende Spreizvorrichtung (125).

20. Anordnung nach einem oder mehreren der vorangehenden Ansprüche, **dadurch gekennzeichnet, dass** ein transparentes Schutzrohr (145) vorgesehen ist, in dem ein Reflektor (144) mit seinen freien Enden auf der Innenwand (146) des Schutzrohres (145) vorspringenden Nasen (147,148) aufsitzt.

21. Anordnung nach Anspruch 20, **dadurch gekennzeichnet, dass** der Reflektor (144) oberseitig eingezogen ist derart, dass er auf den vorspringenden Nasen (147,148) aufsitzend in oberen Abschnitten (149,150) gegen die Innenwand (146) des Schutzrohrs (144) verspannt ist.

## Claims

1. A luminaire arrangement with operating electronics (9) in spacers (5, 6) for a luminaire extending axially, which at the end side is provided with electrical plug connections and is captured in the axial spacers accommodating the operating electronics for use between two existing fluorescent tube holders, **characterized in that** the operating electronics (9) has a starting module (16) for connection to the distal side of the luminaire (23), a safety module (17) connected to the starting module (16), this followed by a filter module (18), a rectifier and voltage stabilization module (19), a square wave generator module (20), a voltage transformer module (21) and finally, connected to the proximal side of the luminaire (23), an overvoltage protection and end of live module (22).

2. The arrangement according to claim 1, **characterized in that** a short-circuit bridge (15) of the arrangement bridges the contacts of an existing holder of a starter (14) of a fluorescent lamp holder and that the short-circuit bridge is covered by a separately formed housing.

3. The arrangement according to any one or several of the preceding claims, **characterized in that** the starting module (16) during the starting process lowers the operating voltage and/or that the starting module (16) applies the full operating voltage to the safety module (17) only following ignition of the luminaire (23).

4. The arrangement according to any one or several of the preceding claims, **characterized in that** the starting module (16) monitors the flowing current at the distal connections (28, 29) of the luminaire (23).

5. The arrangement according to any one or several of the preceding claims, **characterized in that** the safety module (17) has a thermal fuse.

6. The arrangement according to any one or several of the preceding claims, **characterized in that** a rectified voltage is fed back to the filter module (18) from the rectifier and voltage stabilization module (19).

7. The arrangement according to any one or several of the preceding claims, **characterized in that** the square wave module (20) converts the DC voltage supplied by the rectifier and voltage stabilization module (19) into a high-frequency square wave voltage by means of a multivibrator (39).

8. The arrangement according to claim 7, **characterized in that** the multivibrator (39) is capable of being switched off by means of an electrical switching signal.

9. The arrangement according to any one or several of the preceding claims, **characterized in that** the ignition and conducting voltage of the luminaire (23) is provided by a transformer (40) of the voltage transformer module (21).

10. The arrangement according to claim 7, **characterized in that** a safety cut-off of the overvoltage protection and end of live module (22) supplies an electrical switching signal to the multivibrator (39) which switches off said multivibrator if no ignition of the luminaire (23) has taken place.

11. The arrangement according to any one or several of the preceding claims, **characterized in that** an axial spacer (51) is constructed in several parts with an accommodation (54) accommodating the luminaire (53) on the one end in an accommodation space (55) and on the other end a cap (79) closing off the accommodation (54).

12. The arrangement according to claim 11, **characterized in that** a ring shoulder (56) located axially outside in front of the accommodation space (55) is formed through a cross sectional enlargement of this recess, that a covering plug (57) is set against the ring shoulder (56) and that the covering plug (57) has a nut (58) located radially outside in which a sealing ring (59) sealing against the luminaire (53) is captured.

13. The arrangement according to any one or several of the preceding claims, **characterized in that** a spacer (51, 52) is held in a union nut (155) which, having an internal thread (156) on the one end, is capable of being screwed together with an external thread of a fluorescent tube holder.

14. The arrangement according to claim 13, **characterized in that** on the other end the union nut (155) has a threadless section (157) which covers a flat sealing ring (153, 154) put onto the accommodation (54, 80).

15. The arrangement according to claim 14, **characterized in that** the flat sealing ring (153, 154) is overlapped by a lug (158) of the union nut (155).

16. The arrangement according to any one or several of the preceding claims, **characterized in that** in an accommodation (54) of the spacers at least one electronic module is mounted on a board (65), that lugs (69, 70) protrude from the inner wall (68) of the accommodation (54), which correspond with slots (71, 72) in a section of the board (65) corresponding to the inner geometry of the accommodation (54) for unmistakable insertion.

17. The arrangement according to any one or several of the preceding claims, **characterized in that** both accommodations (54, 80) of the spacers enclosing a luminaire (53) have at least an electronic module, that the accommodations (54, 80) have lugs (107, 108) axially protruding on to the luminaire (53), which cover perforations and/or contact means provided for cabling of the modules.

18. The arrangement according to any one or several of the preceding claims, **characterized in that** at the top of a reflector (109) guides (110) for cabling of the modules are provided.

19. The arrangement according to claim 18, **characterized by** a spreading device (125) firmly placed on to the reflector (109) and/or the luminaire which keeps the reflector (109) away from the luminaire (53).

20. The arrangement according to any one or several of the preceding claims, **characterized in that** a transparent protective tube (145) is provided in which a reflector (144) with its free ends is seated on lugs (147, 148) protruding from the inner wall (146) of the protective tube (145).

21. The arrangement according to claim 20, **characterized in that** the reflector (144) is drawn-in at the top such that, sitting on the protruding lugs (147, 148), it is braced in upper sections (149, 150) against the inner wall (146) of the protective tube (144).

## Revendications

1. Structure de moyens d'éclairage, avec une électronique de service (9) en pièces intercalaires (5, 6) pour un moyen d'éclairage s'étendant en direction axiale, qui côté extrémité est muni de prises embrochables et qui est capturé dans des pièces intercalaires réceptionnant l'électronique de service, pour une utilisation entre deux douilles de tube fluorescent, **caractérisé en ce que** l'électronique de service (9) comporte un module d'amorçage (16) destiné à être raccordé sur le côté distal du moyen d'éclairage (23), un module de sécurité (17) raccordé sur le module d'amorçage (16), se raccordant sur celui-ci, un module de filtrage (18), un module redresseur de courant et stabilisateur de tension (19), un module générateur de signaux rectangulaires (20), un module transformateur de tension (21) et raccordé en terminaison sur le côté proximal du moyen d'éclairage (23), un module coupe-circuit de surtension ou module End of Live-Modul (22).

2. Structure selon la revendication 1, **caractérisé en ce que**, un pontage de court-circuit (15) de la structure shunte les contacts d'une douille présente d'une électrode d'amorçage (14) d'une douille d'un tube fluorescent et **en ce que** le pontage de court-circuit est recouvert par un boîtier de conception séparée.

3. Structure selon l'une quelconque ou plusieurs des revendications précédentes, **caractérisé en ce que**, pendant le processus d'amorçage, le module d'amorçage (16) abaisse la tension de service et/ou **en ce que** le module d'amorçage (16) n'applique la pleine tension de service au module de sécurité (17) qu'après l'allumage du moyen d'éclairage (23).

4. Structure selon l'une quelconque ou plusieurs des revendications précédentes, **caractérisé en ce que** le module d'amorçage (16) sur les raccords distaux (28, 29) du moyen d'éclairage (23) surveille le courant qui circule.

5. Structure selon l'une quelconque ou plusieurs des revendications précédentes, **caractérisé en ce que** le module de sécurité (17) comporte un fusible thermique.

6. Structure selon l'une quelconque ou plusieurs des revendications précédentes, **caractérisé en ce que**, une tension redressée est renvoyée vers le module de filtrage (18) par le module redresseur de courant et stabilisateur de tension (19).

7. Structure selon l'une quelconque ou plusieurs des revendications précédentes, **caractérisé en ce que** le module générateur de signaux rectangulaires (20) transforme la tension continue fournie par le module redresseur de courant et stabilisateur de tension (19) au moyen d'un multivibrateur (39) en une tension rectangulaire haute fréquence.

8. Structure selon la revendication 7, **caractérisé en ce que** le multivibrateur (39) est susceptible de se déconnecter au moyen d'un signal de commutation électrique.

9. Structure selon l'une quelconque ou plusieurs des revendications précédentes, **caractérisé en ce que** la tension d'amorçage et de décharge du moyen d'éclairage (23) est mise à disposition par un transformateur (40) du module transformateur de tension (21).

10. Structure selon la revendication 7, **caractérisé en ce qu'**un coupe-circuit de sécurité du module coupe-circuit de surtension ou module End of Live (22) fournit au multivibrateur (39) un signal de commutation électrique qui déconnecte ce dernier, lorsque le moyen d'éclairage (23) n'a pas été allumé.

11. Structure selon l'une quelconque ou plusieurs des revendications précédentes, **caractérisé en ce que**, une pièce intercalaire axiale (51) est conçue en plusieurs éléments, avec un logement (54) réceptionnant le moyen d'éclairage (53) sur une extrémité dans un espace de logement (55) et sur l'autre extrémité, avec une calotte (79) terminant le logement (54).

12. Structure selon la revendication 11, **caractérisé en ce que**, un épaulement annulaire (56) est conçu pour se situer à l'extérieur, en direction axiale, à l'avant de l'espace de logement (55), par un agrandissement de la section transversale dudit évidement, **en ce que** un bouchon de protection (57) est placé contre l'épaulement annulaire (56) et **en ce que** le bouchon de protection (57) comporte une rainure (58) située à l'extérieur en direction radiale, dans laquelle est capturée une bague d'étanchéité (59) assurant l'étanchéité par rapport au moyen d'éclairage (53).

13. Structure selon l'une quelconque ou plusieurs des revendications précédentes, **caractérisé en ce que**, une pièce intercalaire (51, 52) est maintenue dans un écrou d'accouplement (155), qui, comportant un taraudage (156) sur une extrémité est vissé sur un filetage d'une douille d'un tube fluorescent.

14. Structure selon la revendication 13, **caractérisé en ce que**, sur l'autre extrémité, l'écrou d'accouplement (155) comporte un tronçon non fileté (157) recouvrant une bague d'étanchéité plate (153, 154) montée sur le logement (54, 80).

15. Structure selon la revendication 14, **caractérisé en ce que** la bague d'étanchéité plate (153, 154) est chevauchée par un tenon (158) de l'écrou d'accouplement (155).

16. Structure selon l'une quelconque ou plusieurs des revendications précédentes, **caractérisé en ce que** dans un logement (54) des pièces intercalaires, au moins un module électronique est conçu sur une platine (65), **en ce que** des tenons (69, 70), correspondant, pour une insertion irréversible dans une section de la platine (65) à des rainures (71, 72) conformes à la géométrie intérieure du logement (54) saillissent à partir de la paroi intérieure (68) du logement (54).

17. Structure selon l'une quelconque ou plusieurs des revendications précédentes, **caractérisé en ce que** les deux logements (54, 80) des pièces intercalaires entourant un moyen d'éclairage (53) comportent au moins un module électronique, **en ce que** les logements (54, 80) comportent des tenons (107, 108) saillant en direction axiale vers le moyen d'éclairage (53), qui recouvrent des perçages prévus pour un câblage des modules et/ou des moyens de contact.

18. Structure selon l'une quelconque ou plusieurs des revendications précédentes, **caractérisé en ce que**, sur le côté supérieur d'un réflecteur (109) sont prévus des guidages (110) pour un câblage des modules.

19. Agencement selon la revendication 18, **caractérisé par** un élargisseur (125) fixé sur le réflecteur (109) et/ou sur le moyen d'éclairage (53), tenant le réflecteur (109) à distance du moyen d'éclairage (53).

20. Structure selon l'une quelconque ou plusieurs des revendications précédentes, **caractérisé en ce qu'**il est prévu un tube protecteur transparent (145), dans lequel un réflecteur (144) s'appuie par son extrémité libre sur des tenons (147, 148) saillant sur la paroi intérieure (146) du tube protecteur (145).

21. Structure selon la revendication 20, **caractérisée en ce que** le réflecteur (144) est renfoncé sur son côté supérieur, de sorte à être contraint contre la paroi intérieure (146) du tube de protection (144), en étant appuyé sur les tenons saillants (147, 148), dans des sections supérieures (149, 150).
